# EUROPÄISCHE PATENTSCHRIFT

(11) **EP 1 393 157 B1**
(45) Veröffentlichungstag und Bekanntmachung des Hinweises auf die Patenterteilung: **18.11.2015**
(21) Anmeldenummer: 02735361.4
(22) Anmeldetag: 14.05.2002
(51) Int. Cl.: G06F 3/12, G06K 15/00, G06K 15/02

(54) **VERFAHREN, GERATESYSTEM UND COMPUTERPROGRAMM-PRODUKT ZUR VERARBEITUNG VON DOKUMENTENDATEN**
METHOD, EQUIPMENT SYSTEM AND COMPUTER PROGRAM PRODUCT FOR PROCESSING DOCUMENT DATA
PROCEDE, SYSTEME D'APPAREILLAGE ET PRODUIT DE PROGRAMMES INFORMATIQUES PERMETTANT DE TRAITER DES DONNEES DE DOCUMENTS

(30) Priorität: 14.05.2001 DE 10123378
(43) Veröffentlichungstag der Anmeldung: 03.03.2004
(73) Patentinhaber: Océ Printing Systems GmbH & Co. KG, 85586 Poing (DE)
(72) Erfinder: SCHMIDT, Jörg, 81673 München (DE); SIEMENS, Rüdiger, 81825 München (DE)
(74) Vertreter: Schaumburg & Partner Patentanwälte mbB
(86) Internationale Anmeldenummer: PCT/EP2002/005297
(87) Internationale Veröffentlichungsnummer: WO 2002/093354

(56) Entgegenhaltungen:
- EP-A- 0 697 648
- WO-A-00/49489
- DE-A- 10 034 841

## Beschreibung

Die Erfindung betrifft ein Verfahren, und ein Gerätesystem und ein Computerprogrammsystem zur Verarbeitung von Dokumentendaten. Sie betrifft insbesondere ein Verfahren und Systeme zur Verarbeitung eines Druckdatenstroms, der zur Ausgabe auf einem Ausgabegerät wie z.B. einem Druckgerät oder einem Elektronischen Postversandsystem (email System) aufbereitet wird. In elektronischen Hochleistungsdrucksystemen erfolgt eine derartige Aufbereitung typischerweise in Computern, die Druckdateien oder Druckdaten aus Anwenderprogrammen heraus druckerangepaßt verarbeiten. Die Druckdaten werden dabei z.B. als Ausgabedatenstrom einer bestimmten Druckdatensprache wie AFP (Advanced Function Presentation), PCL (Printer command Language) oder Post-Script verarbeitet.

In Großrechenzentren werden Druckdaten typischerweise in einem Host Computer (Main Frame) gesammelt (Spooling-Vorgang) und daraus Druckaufträge (Jobs) generiert, die derart zur Ausgabe auf Hochleistungsdrucksystemen angepaßt sind, daß die Hochleistungsdrucksysteme im Produktionsbetrieb zeitlich optimal ausgelastet werden können. Sie können dabei weitgehend im kontinuierlichen Betrieb eingesetzt werden.

Derartige Hochleistungsdrucksysteme mit Druckgeschwindigkeiten von etwa 40 DIN A 4 Seiten pro Minute bis zu über 1000 DIN A 4 Seiten pro Minute sind beispielsweise in der Veröffentlichung "Das Druckerbuch", herausgegeben von Dr. Gerd Goldmann (Oce Printing Systems GmbH), Ausgabe 4C, Oktober 1999, ISBN 3-000-00 1019-X beschrieben. Im Kapitel 12 (Seiten 12-1 bis 12-18) dieser Publikation ist das unter dem Namen PRISMA PRO^{®} bekannte Druckserver-System beschrieben, welches in Produktions-Druck-Umgebungen der Aufbereitung von Druckdatenströmen dient.

Im Kapitel 14 desselben Buches ist unter dem Titel "Océ Domain" ein Produktionsüberwachungs- und kontrollsystem beschrieben, in dem ein Dokumentenproduktionsprozess geplant, überwacht und gesteuert wird. Das System kontrolliert die Produktion von Dokumenten und überwacht dabei, ob die Dokumente korrekt gedruckt und das Druckgut im Zuge der Weiterverarbeitung - beispielsweise in einem Schneidegerät, einem Kuvertiergerät, und/oder einem Gerät für den Postversand, korrekt verarbeitet wird. Bei Störungen veranlaßt das System automatisch den Nachdruck eines Ersatzdokuments und das Aussondern des fehlverarbeiteten Dokuments, so daß eine durchgängige Prozeßkontrolle vom Erzeugen des Dokuments in einem elektronischen System, z.B. einem Anwenderprogramm in einem Computer, bis zum Abschluß des Produktionsprozesses, beispielsweise durch die Bereitstellung des Dokuments zum Postversand, sichergestellt ist.

Zur Steuerung und Überwachung des Dokumentenproduktionsvorganges sind in dem oben genannten System mehrere, Computer steuernde Komponenten, sog. Manager, vorgesehen, die verschiedene Überwachungs- bzw. Steuerungsaufgaben in dem Dokumentenproduktionsvorgang wahrnehmen. In einem sog. Systems Manager werden Betriebsdaten des gesammten Druck- bzw. Vor- und Nachverarbeitungsprozesses erfaßt. Dabei werden alle bei der Abarbeitung des Dokumentenproduktionsauftrags anfallenden Informationen, z.B. die Anzahl, Größe und Parameter der zu bearbeitenden Aufträge (Jobs), deren Fertigstellungsgrad und Dauer festgehalten sowie die Geräte erfaßt, mit denen die Aufträge bearbeitet wurden.

Mit dem sog. Device Manager werden Maschinendaten des Dokumentenproduktionssystems erfaßt. Dabei werden statische Maschinendaten wie z.B. die Gerätebezeichnung, dessen Seriennummer, Version einer Steuerungssoftware etc. einmalig in eine Datenbank aufgenommen. Dynamische Maschinendaten, die kontinuierlich während des Betriebs des Geräts erfaßt werden, z.B. aktuelle Geräteeinstellungen, Fehlermeldungen und Leistungsdaten (Zählerstände, Taktraten usw) werden dabei laufend mit einem entsprechenden Zeitstempel versehen und ebenfalls in der Datenbank erfaßt. Anhand dieser Daten können dann Geräte-Auswertungen für Einzelgeräte oder Gerätegruppen erfolgen, beispielsweise Auslastungsberichte, Fehlerberichte oder Leistungsberichte erzeugt werden. Derartige Daten oder Berichte können dann über eine anwenderprogrammspezifische Schnittstelle (Application Programme Interface, API) in andere, zur Auswertung geeignete Systeme exportiert werden.

Ein typisches Druckdatenformat in elektronischen Produktions-Druck-Umgebungen ist das Format AFP (Advanced Function Presentation), welches beispielsweise in der Publikation Nr. F-544-3884-01 der Firma International Business Machines Corp. (IBM) mit dem Titel "AFP Programming Guide and Line Data Reference" beschrieben ist. In dieser Veröffentlichung ist auch die Spezifikation für einen weiteren Datenstrom mit der Bezeichnung "S/370 Line-Mode Data" beschrieben. Der Druckdatenstrom AFP wurde weiterentwickelt zu dem Druckdatenstrom MO:DCA, welcher in der IBM-Publikation SC31-6802-04 mit dem Titel "Mixed Object Document Content Architecture Reference" beschrieben ist. Details dieses Datenstroms, insbesondere die Verwendung von strukturierten Feldern (structured fields), sind in der US-A-5,768,488 beschrieben.

Von der Firma IBM ist das unter der Bezeichnung ACIF bekannt gewordene Programm geschaffen worden, mit dem es möglich ist, Druckdatenströme zu konvertieren und zu indizieren. Die ACIF-Anwendung ist in der IBM-Broschüre G544-3824-00 mit dem Titel "Conversion and indexing facility application programming guide" sowie in der IBM-Broschüre Nr. S544-5285-00 mit der Bezeichnung "AFP conversion and indexing facility (ACIF) user's guide" beschrieben.

In der WO-A1-00/49489 sind ein Verfahren und ein System zum Betreiben eines Drucksystems unter Produktionsbedingungen beschrieben, bei denen mehrere Druckgeräte und Zusatzgeräte mit Steuerungscomputern gekoppelt sind und bei denen Steuerungsinformationen zwischen den Geräten und den Computern ausgetauscht werden. Dabei werden Druckdaten von einer Datenquelle wie z.B. einem Host-Computer an einen Druckserver übertragen und dann von diesem auf geeignete Druckgeräte verteilt. Der Druckserver weist dabei jeder zu druckenden Seite als individuelle Seiteninformation einen Barcode zu, der an geeigneten Stellen der jeweiligen Druckseiten in den Druckgeräten gedruckt und von Barcode-Leseeinrichtungen erfasst wird. Die erfassten Daten werden an den Druckserver zurück gemeldet und von diesem zur Regelung des Produktionsablaufs verwendet.

In der WO-A1-00/68877 sind ein Verfahren und ein System beschrieben, mit dem Druckdaten in einer logischen, einer Signatur entsprechenden Seitenfolge zum Drucken bereitgestellt werden.

In der WO 01/77807 A2 (Int. Anm. Nr. PCT/EPO1/04556) sind ein Verfahren und ein Gerätesystem beschrieben, mit denen große, unter Umständen mehrere Tausend Druckseiten umfassende Druckdatenströme für eine Ausgabe mit hoher Geschwindigkeit unter Druckproduktionsbedingungen verarbeitet werden. Die Druckdatenströme werden dabei in ein normiertes Datenformat umgesetzt, die Daten anschließend indiziert und mittels der dabei erzeugten Indizes mittels vorgegebener vorgegebener Parameter so umsortiert, dass sie in ihren Druckreihenfolge für nachfolgenden Verarbeitungsschritte geschwindigkeitsoptimiert angepasst sind.

In der WO 02/19182 A2 sind Verfahren und Systeme beschrieben, mit denen ein Dokumentenproduktionsprozess in einem Hochgeschwindigkeitsdrucksystem zeitoptimiert durchgeführt werden kann.

In der US 6,137,967 A ist ein Überwachungssystem beschrieben, mit dem erzeugtes Druckgut hinsichtlich seiner Integrität mit den zum Drucken vorgesehenen Daten geprüft wird.

Aus der US 6,030,132 A ist ein Dokumentenproduktions- und bearbeitungssystem für sogenannte mail pieces (Postvertriebssendungen) bekannt.

Aus der DE 696 11 649 T2 ist ein System zur Messung der Stapelhöhe in einem Mailbox-Korn eines von mehreren Anwendern gemeinsam genutzten Druckers bekannt.

Weitere Dokumentenproduktions- und drucksysteme sind aus der US 5,768,488 A, der DE 692 30 653 T2 und der US 5,609,333 A bekannt.

Aus der DE 100 34 841 A1 ist ein Drucksystem bekannt, bei dem Druckaufträge für Dokumentendaten von Anwendungscomputern erzeugt und über einen in einem sog. Betriebsmittelserver integrierten Auftragsprozessor an Druckgeräte gesandt werden. Der Auftragsprozessor kann die Dokumentendaten direkt oder nach Extraktion von Dokumentendaten, Druckbefehlen oder anderen Steuerungsbefehle für den jeweiligen Drucker an den Drucker weiterleiten. Nach Abschluß des Druckauftrags gibt das Druckgerät Aftrags-Ergebnisinformationen an den Betriebsmittelserver zurück, in dem diese weiter verarbeitet werden können.

Es ist Aufgabe der Erfindung, ein Verfahren, ein Gerätesystem sowie ein Computerprogramm-Produkt anzugeben, mit denen die Verarbeitung von Dokumentendaten zur Ausgabe der Daten an einem Dokumentenausgabesystem unter Produktionsbedingungen mit hoher Geschwindigkeit möglich ist, wobei eine große Ausfallsicherheit gegeben ist und im Falle eines etwaigen Ausgabefehlers bereits ausgegebene Daten wieder schnell für eine erneute Ausgabe verfügbar gemacht werden können.

Diese Aufgabe wird durch die in den unabhängigen Ansprüchen 1, 19 und 21 angegebene Erfindung gelöst. Vorteilhafte Ausführungsformen der Erfindung sind Gegenstand der Unteransprüche.

Gemäß einem ersten Aspekt der Erfindung werden Dokumentendaten in einem Dokumentenbearbeitungssystem, das zumindest einen Dokumentenerzeugungscomputer, einen Dokumentenbearbeitungscomputer, ein elektronisches Dokumentenausgabesystem wie z.B. ein Druckgerät oder ein E-Mail System sowie einen Überwachungscomputer umfasst, mittels eines Dokumenten-Erzeugungsmoduls auf dem Dokumentenerzeugungscomputer produziert. Die Dokumentendaten werden dann von dem Dokumentenerzeugungscomputer an einen Bearbeitungscomputer übertragen und dort weiter bearbeitet. Im Zuge dieser Weiterbearbeitung werden den übertragenen Dokumentendaten Steuerungsdaten mittels eines Bearbeitungsmoduls automatisch hinzugefügt und die Steuerungsdaten zusätzlich in einer vom Dokumentendatenstrom getrennten Steuerungsdaten-Zwischendatei abgespeichert. Das Abspeichern erfolgt insbesondere im Bearbeitungscomputer, die Datei kann jedoch auch in den Überwachungscomputer übertragen, insbesondere kopiert, werden.

Die Steuerungsdaten werden den Dokumentendaten im Bearbeitungscomputer insbesondere bereichsweise hinzugefügt bzw. zugeordnet und bei der Ausgabe mit ausgegeben bzw. im Zuge eines Ausdrucks zumindest bereichsweise auf zugehörigem Druckgut ausgedruckt. Derartige bereichsweise Daten können innerhalb eines Druckauftrages, der mehrere tausend Seiten umfassen kann, einem vorgegebenen Bereich der Hierarchie zugeordnet sein, z.B. einem Dokument, das mehrere Seiten umfassen kann, einer sogenannten Sendung (englisch: mail piece), das eines oder mehrere Dokumente umfasst, einem Blatt, das eine oder zwei Seiten umfasst oder auch einer einzelnen Seite. Diese im Dokumentendatenstrom bzw. Druckauftrag hierarchisch gegliederten Datenbereiche lassen sich durch die zusätzlichen Steuerungsdaten, an den jeweiligen Produktionsprozess anpassen und insbesondere bei der Steuerung der nachfolgenden Dokumentenausgabe in einem Drucksystem mit zugehörigen Nachverarbeitungssystemen wie Schneideeinrichtung, Kuvertiereinrichtungen etc. zur Optimierung des Gesamtablaufs zumindest logisch verbinden. Hierzu dient insbesondere auch die Steuerungsdaten-Zwischendatei, welche dazu genutzt werden kann, die Steuerungsdaten, beispielsweise Barcodes, zur Erzeugung einer Soll-Liste, zu verwenden. Die Soll-Liste wird insbesondere mit Überwachungsdaten verglichen, welche an den nachverarbeitenden Verarbeitungsstationen (z.B. am Drucker oder am Kuvertierer) erfasst werden. Dabei werden die gedruckten Steuerungsdaten vom jeweiligen Druckgut voll- oder teilautomatisch abgelesen und an die Überwachungseinrichtung übermittelt. Diese überwacht den gesamten Produktionsprozess dahingehend, ob alle Dokumente, Sendungen (mail pieces) und/oder Seiten vollständig und fehlerfrei ausgegeben werden. Dies kann soweit gehen, dass die Auslieferung der Dokumente, ob in gedruckter oder in anderer Weise übermittelt, mittels eines elektronischen Verbindungsnetzwerkes an einen Endkunden über den Erdball hinweg erfasst wird.

In vorteilhaften Ausführungsbeispielen des ersten Aspekts der Erfindung werden im Bearbeitungscomputer weitere, zusätzliche Dateien, insbesondere eine Extraktions-Datei als auch eine Analyse-Datei gebildet, die Daten enthalten, welche aus dem Druckdatenstrom mittels vorgegebener Extraktionsregeln selektiv ermittelt wurden oder auch hinsichtlich vorgegebener Analyseparameter bestimmte statistische Daten, wie z.B. Gesamtseitenzahl eines Auftrags, ermittelt und abgespeichert werden.

Innerhalb eines Dokumentenausgabesystems, das beispielsweise Daten im AFP-Format verarbeitet, erfolgt die erfindungsgemäße Bearbeitung in einem relativ fortgeschrittenen Stadium der Dokumentenbearbeitung, bei der der vollständige Datenstrom bereits kurz vor seiner Ausgabe an ein Ausgabesystem (email- Versandsystem, Drucksystem) steht. Die erfindungsgemäßen Datenbearbeitungs-Vorgänge werden insbesondere unmittelbar vor, nach oder gemeinsam mit einer Sortierung des Datenstroms nach einer vorgegebenen Sortierreihenfolge, beispielsweise nach Postleitzahlen, Namen und/oder Kundennummern durchgeführt.

Gemäß einem zweiten Aspekt der Erfindung, der auch unabhängig vom ersten Aspekt der Erfindung gesehen werden kann, werden in einem Dokumentenbearbeitungssystem, das im wesentlichen dieselben Computer und Geräte umfasst wie das Dokumentenbearbeitungssystem des ersten Aspekts der Erfindung, die Dokumentendaten wiederum von dem Dokumentenerzeugungscomputer an einen Bearbeitungscomputer übertragen und dort bearbeitet. Auch bei diesem Aspekt der Erfindung wird der Datenstrom im Bearbeitungscomputer manipuliert; bei diesem Aspekt der Erfindung werden dem Dokumentendatenstrom jedoch vor der Dokumentenausgabe Steuerungsdaten mittels eines Bearbeitungsmoduls weitgehend automatisch hinzugefügt oder weggenommen. Das Bearbeitungsmodul entscheidet dabei jeweils selbständig, ob Steuerungsdaten, die im eingegangenen Dokumentendatenstrom enthalten sind, für die weitere Bearbeitung nicht mehr benötigt und deshalb entfernt werden können und/oder ob zusätzliche Steuerungsdaten, insbesondere Barcode-Daten, die wie beim ersten Aspekt der Erfindung dazu dienen können, innerhalb des Dokumentendatenstroms einzelne Bereiche derart logisch zusammenzufassen, dass deren weitere Bearbeitung im Ausgabesystem hochperformant (mit großer Geschwindigkeit und hoher Verarbeitungssicherheit) weiterbearbeitet werden können.

Beim zweiten Aspekt der Erfindung werden im Bearbeitungscomputer von einem Steuerungsdiensteprogramm automatisch eine Steuerungszwischendatei, deren Inhalt den hinzugefügten Steuerungsdaten entspricht, sowie eine Dokumenten-Zwischendatei, in der die für den Ausgabeprozess (Druckprozess) wesentlichen Dokumentendaten enthalten sind, gebildet und abgespeichert. Die Zwischendateien erlauben insbesondere, die bei einem Fehler im Ausgabesystem notwendige erneute Bereitstellung der Dokumentendaten mit hoher Performance durchzuführen. Sobald vom Überwachungscomputer anhand der ihm zu Verfügung stehenden Steuerungsdaten festgestellt wird, dass bei der Dokumentenausgabe ein Fehler aufgetreten ist, kann er eine Rückmeldung an den Bearbeitungscomputer geben, der anhand der gespeicherten Steuerungsdaten und der Dokumenten-Zwischendatei ohne zeitlichen Verzug sofort die entsprechenden Dokumentendaten reproduzieren und dem Ausgabesystem erneut zuführen kann (Reprint).

Gemäß dem zweiten Aspekt der Erfindung kann insbesondere bei der Reduktion des Druckdatenstroms um nicht benötigte Steuerungsinformationen eine Datenverdichtung bzw. Datenkompression erreicht werden, ohne die für den Druck maßgeblichen Druckdaten zu beeinflussen. Für den weiteren Druckprozess nicht benötigte Daten können somit ohne weiteres ausgefiltert und der Datenstrom somit um unnötige Daten reduziert werden. Andererseits bewirkt die gezielte Ergänzung von Steuerungsinformationen, deren Struktur und/oder Inhalt an den nachfolgenden Ausgabeprozess bzw. an die Erfodernisse der daran beteiligten Ausgabegeräte angepaßt sind, eine weiter Verbesserung des Produktionsprozesses. Das Einfügen von Barcodes ist insbesondere für die Ausgabe von Sendungen (mail pieces), die aus verschiedenen, innerhalb des Eingangsdatenstroms stammenden Einzelseiten zusammengestellt werden, vorteilhaft. Dies gilt in besonderem Maße dann, wenn der Datenstrom im Bearbeitungscomputer zusätzlich derart umsortiert wird, dass der umsortierte, an das Ausgabesystem übermittelte Datenstrom ebenfalls an die Ausgabensysteme angepasst sind, beispielsweise indem verschiedene Dokumente bzw. Seiten, die zu einem mail piece zusammengeführt werden sollen, bereits im Druckdatenstrom in aufeinander folgender Reihenfolge an das Ausgabesystem geliefert werden und somit direkt hintereinander ausgedruckt werden.

Gemäß einem dritten Aspekt der Erfindung, der ebenfalls ein Dokumentenbearbeitungssystem der o.g. Art betrifft, aber unabhängig von den beiden anderen, vorher genannten Aspekten der Erfindung gesehen werden kann, werden derartige Steuerungsdaten im Berabeitungscomputer den Dokumentendaten hinzugefügt, dass die Dokumente bei den nachfolgenden Verarbeitungsschritten, insbesondere bei der Ausgabe des Dokuments, segmentweise getrennt verarbeitbar ist. Derartige Daten können beispielsweise Barcodes sein, die insbesondere jeweils am Anfang und am Ende des betreffenden Segments des Datenstroms eingefügt werden. Als Segmente eignen sich wiederum Seiten, Blätter, Dokumente und Sendungen (mail pieces). Es können zusätzlich oder alternativ auch andere Segmentierungskriterien, wie z.B. eine maximale Anzahl von Gesamtseiten gewählt werden. Durch eine derartige segmentweise Verarbeitung im Ausgabebereich kann eine Stapelverarbeitung erreicht werden, durch die insbesondere große Druckaufträge mit mehreren tausend Seiten vor allem dann leichter zu verarbeiten sind, wenn diese einen manuellen Zwischenschritt erfordern. Die Segmente können dann derart gewählt werden, dass sie eine bestimmte Blattzahl nicht überschreiten, wobei die Segmentierung insbesondere vollautomatisch nach vorgegebenen Segmentierungsregeln erfolgt. Dazu weist der Bearbeitungscomputer ein Bearbeitungsmodul auf, das die eingehenden Dokumentendaten untersucht und automatisch die entsprechenden Steuerungsdaten jeweils am Anfang und am Ende des Segments einfügt. Hierdurch werden die Dokumentendaten auftragsweise hinsichtlich ihrer Größe analysiert und ein Auftrag in mindestens zwei Teilaufträge aufgeteilt, wenn er jeweils eine vorbestimmte Größe überschreitet. Dadurch, dass die Stapeldaten über den Beginn, das Ende und/oder über den Umfang des Teilauftrages in den Druckdatenstrom eingefügt werden, können diese auch ausgedruckt und bei der späteren Verarbeitung insbesondere mit automatischen Leseeinrichtungen von den gedruckten Dokumenten sowohl am Anfang des Segments als auch am Ende des Segments erfasst werden. Die Angabe von zumindest zwei der Segmentierungsdaten "Anfang", "Ende" und "Umfang" lassen dann ein sicheres Ablesen und Verarbeiten der Segmente zu, selbst wenn das erzeugte Druckgut aufeiandergestapelt und deshalb nur Daten vom obersten Dokument des Stapels erfassbar sind.

Gemäß einem bevorzugten Ausführungsbeispiel der Erfindung ist als Datenerfassungsgerät ein mit einer Einrichtung (z.B. IR-Übertragung oder Funk-Antenne) für eine drahtlose Datenübertragung zu einer Steuerungseinheit umfassende Barcode-Leseeinrichtung vorgesehen, die über die Steuerungseinheit mit dem Überwachungscomputer verbunden ist. Weiterhin vorteilhaft ist es dabei, wenn die Barcode-Leseeinrichtung zusätzlich eine Eingabe-Einheit (Tastatur, touch screen, Display) umfasst, über die direkt vom Hand-Barcode-Leser Steuerungsbefehle an den ÜberwachungsComputer übermittelbar sind. Dadurch eröffnet sich die Möglichkeit, dass Bedienungspersonal, das mit den ausgedruckten Materialien manuelle Bearbeitungen vornehmen muß, auf den Überwachungscomputer und ggf. über diesen sogar auf alle am Druckproduktionsprozess beteiligten Komponenten, vom Datenerzeugungsmodul bis hin zum Versandautomaten, durch Eingabe von Befehlen steuerungsmäßig zugreifen kann.

Gemäß einem weiteren Aspekt der Erfindung, der ebenfalls ein Dokumentenbearbeitungssystem der o.g. Art betrifft und auch unabhängig von den vorher genannten Aspekten der Erfindung gesehen werden kann, wird ein Dokumentensuchsystem angegeben, mit dem Dokumente insbesondere in einem Druckproduktionsystem lokalisierbar sind. Dazu ist eine zentrale Dokumentendienst-Steuerung vorgesehen, die diverse produktionstechnisch erzeugte Steuerungsdaten erfasst und welche diese Daten für die Dokumentensuche sowohl zentral als auch dezentral zur Verfügung stellt.

Durch die Erfindung ist es in einer Druckproduktionsstraße nunmehr möglich, Nachdrucke (sog. Reprints), die beispielsweise wegen fehlerhaftem Ausdruck oder fehlerhafter Nachverarbeitung (falscher Faltung, falschem Schneiden, fehlerhaftes Kuvertieren, Dokumentenbeschädigungs etc.) nötig sind, dokumentengenau zu verfolgen und dokumentengenau neu zu drucken. Die Verfolgung der Reprint-Dokumente erfolgt dabei vollautomatisch und systemübergreifend. Somit können die Angaben zu Nachdruck-Aufträgen in allen Geräten verfügbar gemacht werden, die zum zentralen Überwachungscomputer direkt oder indirekt eine Verbindung haben. Dies gilt insbesondere auch für geräte, die die Dokumente nach dem Drucken weiterverarbeiten. Die Dokumente werden dabei von einem der angeschlossenen Computer, z.B. vom Überwachungscomputer und/oder vom Bearbeitungscomputer elektronisch verfolgt.

Weitere Wirkungen, Vorteile und Einzelheiten der Erfindung werden nachfolgend deutlich, indem Ausführungsbeispiele der Erfindung anhand einiger Figuren näher erläutert werden.

Es zeigen:
Figur 1: Ein Produktionssystem zum Drucken von Dokumentendaten,
Figur 2: Komponenten einer Überwachungseinrichtung,
Figur 3: Arbeitsabläufe in einem Dokumentenbearbeitungssystem,
Figur 4: Verschiedene Bearbeitungsschritte und Dateistrukturen bei der Bearbeitung von Dokumentendaten,
Figur 5: Detaillierte Arbeitsschritte zur Erzeugung der in Figur 4 gezeigten Dokumentendateien,
Figur 6: Ein detailliertes Ablaufdiagramm zur Verarbeitung von Dokumentendatenströmen gemäß Figur 5,
Figur 7: Einen Überblick über verschiedene Arbeitsabläufe in einem Dokumentenbearbeitungssystem,
Figur 8: Arbeitsabläufe in einem Druckproduktionssystem,
Figur 9: Arbeitsabläufe zum Nachdrucken von Dokumenten in einem Druckproduktionssystem,
Figur 10: Das Umsortieren von Sendungsdokumenten (mail pieces),
Figur 11: Verschiedene Software/Systemmodule zur Produktionsüberwachung, die geräteübergreifend installiert und funktionell gekoppelt sind,
Figur 12: ein Dokumentendienstprogramm,
Figur 13: die Menüstruktur eines Barcode-Lesesystems,
Figur 14: eine Systemstruktur für ein Überwachungssystem,
Figur 15: ein Anzeigefenster zur Überwachung von Druckaufträgen und Geräten,
Figur 16: ein Beispiel für das Zusammenwirken verschiedener Komponenten zur Information des Anwenders,
Figur 17: ein Überwachungssystem für Drucknachverarbeitungsgeräte und
Figur 18: ein Bildschirm-Menü für Dokumentensuche.

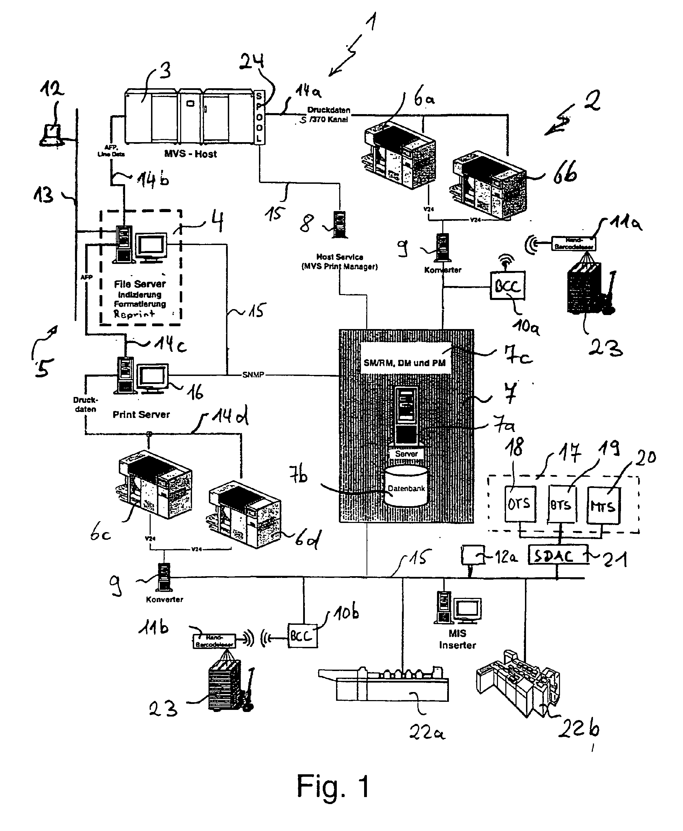

In Figur 1 ist ein Dokumenten-Druckproduktionssystem 1 gezeigt, das zum einen eine Main-Frame-Architektur 2 umfasst und zum anderen eine Netzwerk-Architektur 5, in denen jeweils Dokumentendaten bzw. Dokumentendruckdatenströme mittels Anwenderprogrammen (Tools) erzeugt werden. In der Main-Frame-Architektur 2 werden diese Druckdaten von einem Host-Computer 3, insbesondere als AFP-Druckdatenstrom oder als Zeilendruckdatenstrom, erzeugt. Vom Host-Computer 3 können die Druckdaten wahlweise über einen sog. S/370-Kanal 14a direkt an einen oder mehrere Druckgeräte 6a, 6b übertragen werden. Alternativ zu diesem Ausgabekanal können die Druckdaten auch vom Host-Computer 3 über ein Netzwerk 13 oder eine direkte Datenverbindung 14b zu einem Bearbeitungscomputer 4 übertragen werden, in dem die Druckdaten zwischengespeichert (z.B. in einem zugehörigen File-Server) und für nachfolgende Ausgabeschritte bearbeitet werden. In derartigen Host-Computern 3 werden insbesondere Druckdatenströme erzeugt, die aus größeren Datenbeständen (Datenbanken) regelmäßig Listen-Ausdrucke, Rechnungen, Verbrauchsübersichten (für Telefonrechnungen, Gasrechnungen, Bankkonten) etc. zusammenstellen. Derartige Anwendungen sind häufig bereits seit vielen Jahren im Einsatz und werden nach wie vor in mehr oder weniger unveränderter Weise benötigt (sog. Legacy-Anwendungen).

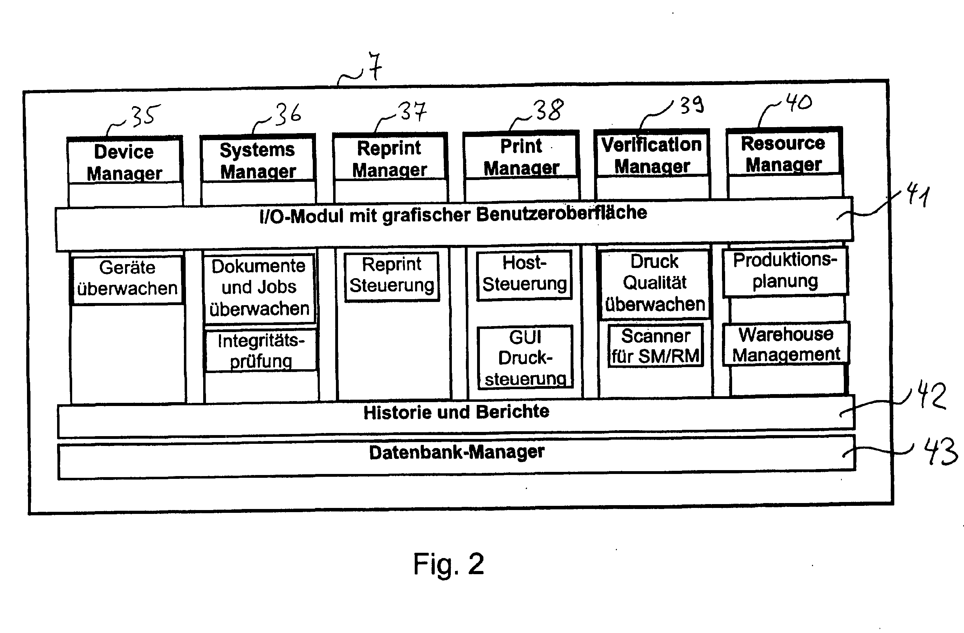

Innerhalb der Main-Frame-Architektur 2 wird der Druckproduktionsablauf von einem Überwachungssystem überwacht. Es umfasst einen Überwachungscomputer 7, der mit einer Datenbank 7b gekoppelt ist und verschiedene Computerprogrammmodule 7c enthält (vergleiche Figur 2).

Das Überwachungssystem ist über ein Gerätesteuerungsnetzwerk 15 und einen Printmanager-Modul 8 mit dem Host-Computer 3 verbunden sowie über einen Konverter 9 mit einer V24-Datenleitung, die an die beiden Druckgeräte 6a, 6b ankoppelt. Der Konverter 9 setzt die V24-Signale in DMI-Protokollsignale des Gerätesteuerungsnetzwerkes 15 um. SNMP-Protokollsignale können dem Device Manager DM als DMI-Protokollsignale umgesetzt bereitgestellt werden bzw. direkt als SNMP-Protokollsignale übergeben werden.

Druckgut 23, das in den Druckern 6a, 6b aus dem Dokumenten-Druckdatenstrom erzeugt wurde und auf dem Barcodes aufgedruckt sind, kann jeweils mit einem manuell bewegbaren, funkgesteuerten Barcode-Leser 11a abgescannt werden. Die Signale werden per Funk an die Lesestation 10a übertragen und in das Gerätesteuerungsnetzwerk 15 bzw. an das Überwachungssystem 7 übermittelt. Als Barcode-Leser können Leser für ein-dimensionale und/oder zwei-dimensionale Barcodes eingesetzt werden, sodass verschiedene Barcode-Systeme mit ein und derselben Lesevorrichtung gelesen werden können. Das Barcode-Lesesystem ist insbesondere konfigurierbar, d.h., auf verschiedene, anwendungsspezifische Codes bzw. die jeweils geeigneten Kontrollverfahren anwendbar.

In der Netzwerk-Architektur 5 werden Dokumentendaten mittels Anwenderprogrammen in Client-Computern 12, 12a erzeugt, die über ein Client-Netzwerk 13 untereinander sowie mit dem Bearbeitungscomputer (File-Server)4 verbunden sind. Der File-Server dient damit als zentrale Verarbeitungs- und Bearbeitungsschnittstelle für Druckdaten des gesamten Druckproduktionssystems 1. Auf ihm laufen diverse Steuerungsmodule (Softwareprogramme), durch die der gesamte Druckproduktionsablauf bzw. die gesamte Dokumentenbearbeitung anwendungsspezifisch, produktionstechnisch und gerätesteuerungsseitig an die jeweiligen Gegebenheiten optimal angepasst wird.

Im Bearbeitungscomputer 4 werden insbesondere folgende Funktionen ausgeführt, die im Zusammenhang mit den nachfolgenden Figuren genauer beschrieben werden:

### 1. Converting Indexing Sorting

Bei dieser Funktion werden eingehende Druckdaten auf ein einheitliches Datenformat konvertiert, nach vorgegebenen Parametern indiziert und in eine vorgegebene Sortierreihenfolge umsortiert. Dies ermöglicht insbesondere die für die nachfolgende Dokumentenausgabe optimierte Umsortierung des Datenstroms, beispielsweise das Zusammenfügen verschiedener Seiten, die im Eingangsdatenstrom nicht aufeinander folgen, derart zu einem Mail-Piece zusammen zu sortieren, dass sie beispielsweise in einem Kuvertiergerät 22b gemeinsam zu einer Briefsendung einkuvertiert werden können.

### 2. Einfügen von Steuerungsinformationen

Bei dieser Funktion werden in den Datenstrom Steuerungsinformationen, insbesondere Barcodes eingefügt, anhand denen eine zusammengehörige Datengruppe (z.B. Seite, Blatt, Dokument, Mail-Piece) als solche erkennbar und im Produktionsprozess an den verschiedenen Verarbeitungsstationen eindeutig lokalisierbar ist.

### 3. Datenreduktion

Mit dieser Funktion lassen sich Steuerungsdaten, die im Eingangsdatenstrom vom Host-Computer 3 bzw. Anwender-Computer 12 an den Bearbeitungscomputer 4 geliefert worden sind, dahingehend filtern, dass solche Steuerungsdaten, die bei der gegebenen Gesamtsystemanordnung nicht benötigt werden, entfernt werden. Durch die Verbindung aller beteiligten Ausgabegeräte (Drucker 6a bis 6d, Schneidegerät (Cutter) 22a, Kuvertiergerät 22b) über das Gerätesteuerungsnetzwerk 15, kann bereits im Bearbeitungscomputer 4 entschieden werden, welche Steuerungsdaten des Eingangsdatenstroms von keinem der angeschlossenen Geräte benötigt wird. Durch Entfernen dieser Daten aus dem Datenstrom kann der Datenstrom insgesamt reduziert werden, insbesondere dann, wenn lediglich leere Feldeinträge zu entsprechenden Steuerungsdaten im Eingangsdatenstrom enthalten sind.

### 4. Extraktion

Mit dieser Funktion lassen sich aus dem Ausgangsdatenstrom vorgegebene Daten filtern bzw. aussondern, wodurch ein komprimierter Datenstrom (verdichtete Daten), insbesondere für Steuerungs- und Statusdaten, entsteht, der mit sehr hoher Geschwindigkeit zwischen den beteiligten Geräten und dem Überwachungscomputer austauschbar ist. Hierdurch ist es möglich, die Überwachung der beteiligten Geräte in Echtzeit (Realtime) auszuführen.

### 5. Wiederholungsdruck (Reprint)

Wenn im Zuge der Weiterverarbeitung der Daten, insbesondere bei der Ausgabe der Daten auf einem der Druckgeräte 6a, 6b, 6c oder 6d, in einem der Nachverarbeitungsgeräte 22a, 22b oder auch im Druckserver 16, ein Fehler auftritt, so kann dies durch das Überwachungssystem 7 anhand der im Bearbeitungscomputer 4 eingefügten Steuerungs-Barcodes festgestellt werden und der Nachdruck der von der Störung betroffenen Dokumente (Seiten, Blätter, Mail-Pieces) angefordert werden. Diese Wiederholungsdruck-Anforderung wird maßgeblich im Bearbeitungscomputer 4 gesteuert.

Druckdaten, die vom Bearbeitungscomputer 4 fertiggestellt wurden, werden über die Druckdatenleitung 14c an den Druckserver 16 geleitet. Dessen Aufgabe ist es im wesentlichen, den Bearbeitungscomputer 4 zu entlasten. Dies erfolgt durch Zwischenspeicherung der fertiggestellten Druckdaten bis zu deren Abruf über die Datenleitung 14d an einen oder beide Drucker 6c, 6d. Der Druckserver 16 ist somit in erster Linie aus Gründen der Performance (Geschwindigkeits) im Gesamtsystem integriert. Bei Systemen, deren Druckgeschwindigkeit weniger groß ist, kann auf den Druckserver 16 auch verzichtet werden.

Dokumentendaten, die an die Drucker 6c bzw. 6b übermittelt und dort auf einen Aufzeichnungsträger (z.B. Papier) gedruckt werden, werden im Gesamtsystem weiteren Bearbeitungsstufen, nämlich dem Schneidegerät 22a und dem Kuvertierungsgerät 22b der weiteren Verarbeitung zugeführt. Damit ist der Druckproduktionsprozess abgeschlossen.

Die gedruckten Dokumente werden auf ihrem Verarbeitungsweg zwischen dem jeweiligen Druckgerät 6a, 6b, 6c bzw. 6d und dem letzten Nachverarbeitungsgerät 22b hinsichtlich verschiedener Kriterien getestet, nämlich durch ein optisches Testsystem 18 hinsichtlich ihrer optischen Druckqualität, mit einem Barcode-Testsystem 19 hinsichtlich ihres Vorhandenseins, ihrer Konsistenz und/oder ihrer Reihenfolge sowie mit einem MICR-Testsystem, sofern der Druck mittels magnetisch lesbarem Toner (Magnetic Ink Character Recognition Toner)gedruckt wurde. Die vom Meßsystem 17 gelieferten Daten der verschiedenen Testsysteme werden von einem gemeinsamen seriellen Datenerfassungsmodul (Serial Delta Aquisition Modul) 21 an das Gerätesteuerungsnetzwerk 15 übermittelt und dem Überwachungssystem 7 zugeführt. Dort werden die jeweiligen Systemdaten erfasst und in Echtzeit die Geräte überprüft sowie die jeweiligen Positionen der Dokumente hinsichtlich ihrer Korrektheit bezüglich des Druckauftrages getestet.

Weitere Details eines derartigen Meßsystems 17 sind im US-Patent Nr. 6,137,967 bzw. in dazu korrespondierenden Patentanmeldungen beschrieben.

Die fertig gedruckten Dokumente 23 können wiederum mit einem Barcode-Leser 11b erfasst werden, der z.B. funkgesteuert mit einer zugehörigen Steuerungseinrichtung 10b verbunden ist, welche wiederum über das Gerätesteuerungsnetzwerk 15 ihre Daten an das Überwachungssystem 7 liefert.

Figur 2 zeigt Systemkomponenten, die innerhalb der Überwachungssystemin Form von Computerprogramm-Modulen (Software) und/oder Hardware-Elementen implementiert sind. Soweit sie zu Elementen der eingangs genannten WO 02/19182 A2 identisch bezeichnet sind nehmen sie auch im wesentlichen dieselben Funktionen wahr.

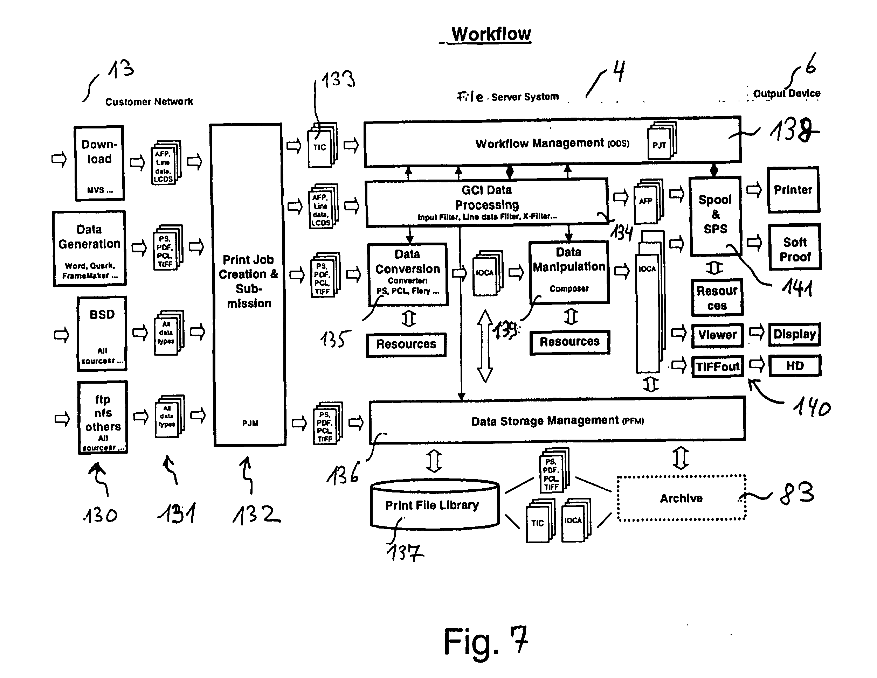

Der Device Manager 35 nimmt hauptsächlich die Aufgabe wahr, Maschinendaten der beteiligten Geräte des Dokumentenproduktionssystems zu erfassen. Sowohl statische als auch dynamische Maschinendaten werden dabei, ggf. mit Angabe des für ein bestimmtes Ereignis geltenden Zeitpunkts, in die Gesamtüberwachungsdatei 9 eingespeichert. Die jeweiligen Kontrolleinrichtungen liefern ihre entsprechenden Maschinendaten in einem entsprechenden Format ereignisweise oder dateiweise (siehe Fig. 7). Der Device Manager 35 überwacht alle am Dokumentenproduktionsvorgang beteiligten Geräte.

Der Systems Manager 36 erfaßt alle mit der Abarbeitung eines Dokumentenproduktionsauftrags entstehenden Informationen, beispielsweise die Anzahl, die Größe und die Parameter der zu bearbeitenden Aufträge, deren Fertigstellungsgrad und Dauer sowie die Zuordnung der Geräte, auf denen der Dokumentenproduktionsvorgang bearbeitet wird. Der gesamte Dokumentenproduktionsprozeß kann damit von der Erstellung des Produktionsauftrages bis zu dessen Beendigung kontrolliert und gesteuert werden. Die Betriebsdaten umfassen zum einen Auftragsdaten eines gesamten Produktionsauftrags, in dem eine Vielzahl einzelner Sendungen und/oder Dokumente enthalten sind. Die Betriebsdaten erfassen zum anderen auch dokumentenweise Daten sowie kennzeichnende Daten einzelner Seiten, die als Kennzeichen einem Dokument zugeordnet sind. Solche dokumentenweise Daten werden z.B. in einem ersten Arbeitschritt erzeugt, insbesondere auf das Dokument als Barcode gedruckt und in einem späteren Verarbeitungsschritt erneut gelesen und erfaßt.

Einem Dokumentenproduktionsauftrag wird jeweils eine Datei zugeordnet, ein sog. elektronisches Job Ticket, in der die für den jeweiligen Auftrag geltenden Auftragsdaten abgelegt werden. Die Auftragsdaten (Jobdaten) können dabei sowohl elektronisch über das den Auftrag generierende System, z.B. im Druckserver 16 oder im Host Computer 3, bereitgestellt werden oder durch maschinengesteuerte Leseverfahren von bedruckten Aufzeichnungsträgern in Form von Barcodes, OCR-Schriften (Optical Character Recognition) oder MICR-Schriften (Magnetic Ink Character Recognition) eingelesen werden.

Mit dem Systems Manager 36 ist es also zum einen möglich, den Produktionsfortschritt eines Auftrags bzw. Dokuments zu verfolgen (Tracking Funktion) in dem an verschiedenen Kontrollpunkten Daten über die durchlaufenden Aufträge, Dokumenten oder Seiten über eindeutige Identifikationsnummern erfaßt und an die Überwachungssystemübermittelt werden. Dabei kann ein Vergleich der Ist-Daten mit vorgegebenen Soll-Daten des Auftrags durchgeführt und doppelte, fehlerhafte oder fehlende Aufträge, Dokumente oder Seiten erkannt und gemeldet werden. Des weiteren kann eine Integritätsprüfung durchgeführt werden, in dem die von den einzelnen Kontrolleinrichtungen abgegebenen Daten untereinander hinsichtlich ihrer Datenintegrität geprüft werden. Weiterhin kann der Systems Manager 36 über eine einfache, graphische Benutzeroberfläche direkte Befehle an den Bearbeitungscomputer 4, das jeweilige Druckgerät und/oder an den Host Computer 3 abgeben. Dazu ist insbesondere vorgesehen, auch den Job Generator in den Systems Manager 36 zu integrieren.

Mit dem Reprint Manager 37 wird bereits im Auftragssammler 23 (Spooler) für alle Dokumente des Produktionsauftrags eine Soll-Liste erstellt und später der tatsächliche Produktionsfortschritt mit dieser Soll-Liste verglichen. Sobald ein Dokument nicht oder nur fehlerhaft verarbeitet wurde, wird eine Meldung zum Nachdruck dieses Dokuments erzeugt und der Nachdruck (Reprint) kann automatisch oder nach Anforderung einer Bedienperson erfolgen. Der Reprint Manager steuert den Nachdruck-Vorgang.

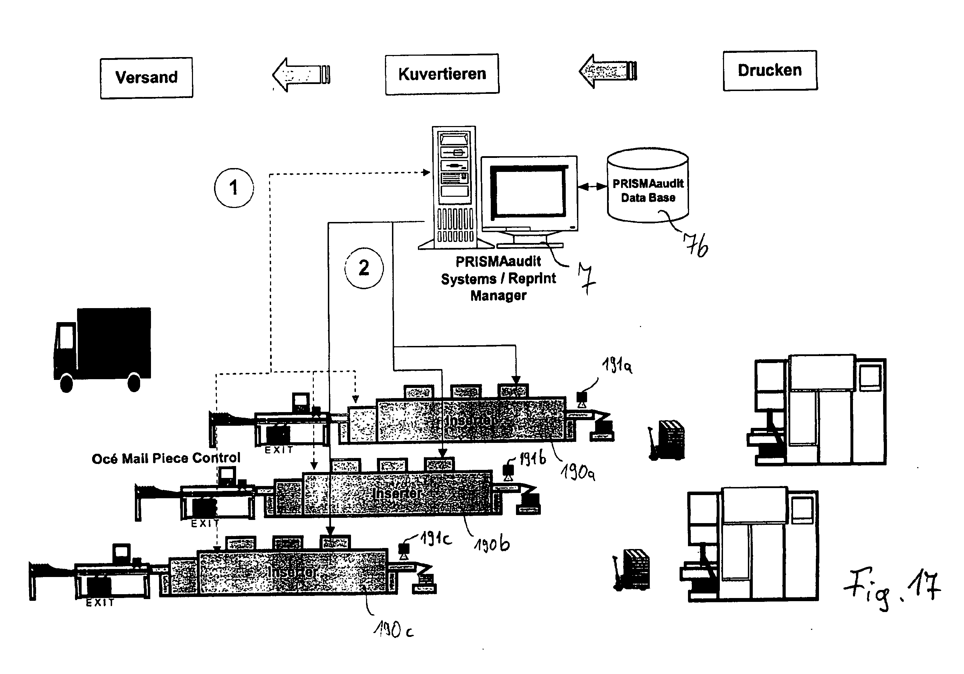

Der Print Manager 38 und der Reprint Manager 37 sind außerdem in der Lage, geräteübergreifend den Produktionsfortschritt zu überwachen. Beispielsweise erzeugen sie ein Stop-Signal, wenn eine Sendung oder ein Dokument zweifach an einem Druck-Nachverarbeitungsgerät auftaucht. Insbesondere bei Kuvertier-Geräten darf eine Sendung bzw. ein Dokument nicht zweifach auftauchen. Dazu werden alle Sendungen, die an Kuvertierern verarbeitet werden, mit den bereits verarbeiteten Sendungen bzw. Dokumenten aller Kuvertierer verglichen und bei einer Übereinstimmung ein Stop-Signal an den Kuvertierer, an dem das Dokument erneut auftritt, gesandt, siehe auch Figur 17.

Der Print Manager 38 ist das Steuerungs-Bindeglied zwischen Überwachungssystem 7, Host Computer 3, Spooler 24 und Druckgeräten 6a, 6b, 6c bzw. 6d. Er dient einerseits zur Steuerung der Abläufe im Host Computer 3 und holt andererseits Spool-Informationen vom Spooler 24 zur Steuerung des Ablaufs und für das Job-Tracking ab. Weiterhin kann er über eine einfache, graphische Benutzeroberfläche direkte Befehle an das jeweilige Druckgerät und/oder an den Host Computer 3 abgeben.

Der Verification Manager 39 dient dazu, die Druckqualität zu überwachen; er kann dazu insbesondere mit Scannern zusammenwirken, die den vom jeweiligen Druckgerät erzeugten Ausdruck abtasten und dessen Qualität überprüfen. Ein entsprechendes System, in dem eine Barcode-Leseeinrichtung (Laser Scanner), ein MICR-Lesegerät für magnetisierbaren Toner (MICR steht für magnetic ink character recognition) und eine digitale, optoelektronische Kamera (CCD) zum Überprüfen der Druckqualität vorgesehen ist, ist beispielsweise in dem US-Patent 6,137,967 A beschrieben. Der Inhalt dieses Patents und dazu korrespondierender Patentanmeldungen wird hiermit ebenfalls durch Bezugnahme in die vorliegende Beschreibung aufgenommen.

Im sog. Resource Manager 40 der Überwachungssystemwird eine Komponente bereit gestellt, in der die Produktionsplanung sowie das Warehouse Management abgewickelt werden kann. Damit können insbesondere im laufenden Druckbetrieb neue Druckaufträge geplant und generiert werden, in dem die aktuell im Einsatz befindlichen Druckgeräte und deren Produktionsfortschritt mit in die Produktionsplanung einfließen.

Der Datenbank-Manager 43 steuert die Ablage von Kontrolldaten-Informationen, Jobinformationen etc. in der Datenbank 7b.

Alle Komponenten (Manager) des Überwachungssystems 7 sind über ein I/O-Modul mit graphischer Benutzeroberfläche 41 untereinander sowie mit den übrigen Komponenten des Dokumentenproduktionssystems 1 verbunden. Zur Generierung von Historien, Berichten und Ausdrucken dient ein Berichtsmodul 42. Derartige Historien und Berichte können aus der Datenbank 8 heraus erzeugt und über ein Anwenderprogramm Interface (Application Programme Interface, API) an Anwenderprogramme wie z.B. das Programm Microsoft Excel^{®} übergeben und/oder über einen separaten, direkt an das Überwachungssystem 7 angeschlossenen Drucker (nicht gezeigt) ausgedruckt werden. Der Datenexport über die API-Schnittstelle erlaubt nur lesende Zugriffe auf die Datenbank 7b. Daten der Datenbank 7b, insbesondere der Protokolldatei, können in ein Archiv, beispielsweise in ein CD-ROM Schreibgerät zur langfristigen Archivierung auf CD-ROM überspielt werden. Die Archivierung der Protokoll-Datei 10 hat dabei gegenüber der Archivierung der Gesamtüberwachungsdatei den Vorteil, daß nur archivrelevante Daten zur Produktion und/oder Qualitätssicherung abgespeichert werden müssen, und somit ein relativ geringes Datenvolumen auf der CD-ROM ausreichend ist. Alle zuvor beschriebenen Manager (siehe Fig. 2) liefern dazu Betriebsdaten und Kontrolldaten für die Protokoll-Datei 10.

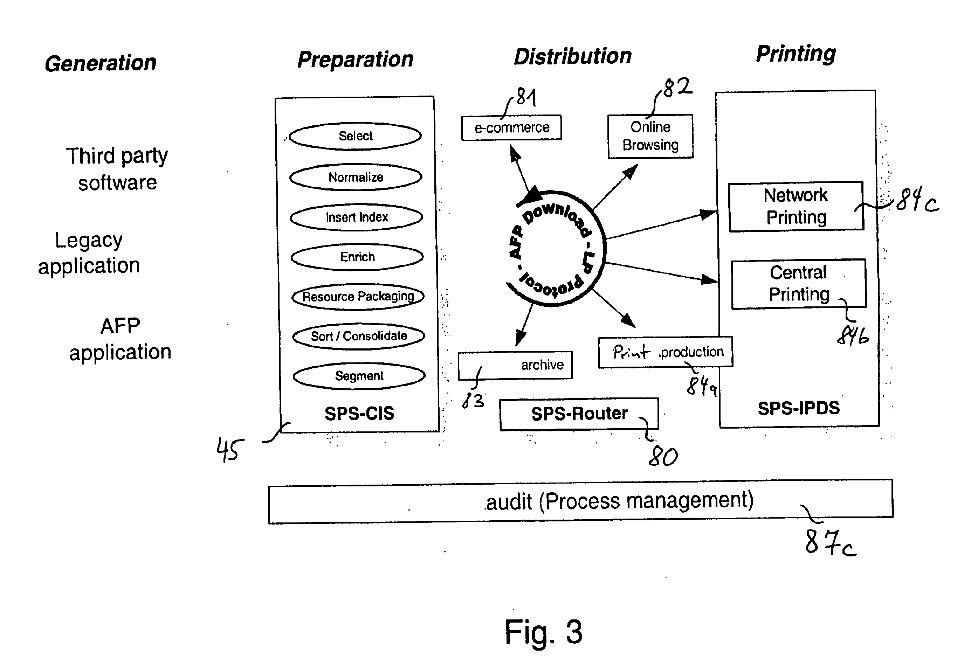

In Figur 3 sind vier Grundstufen zur Verarbeitung von Dokumentendaten in einem Dokumentenproduktionssystem mit angeschlossenem Drucksystem dargestellt. In einer ersten Verarbeitungsstufe "generation" werden Dokumentendaten erzeugt bzw. in das Dokumentendatensystem eingelesen. Dies kann auf dreierlei Weise passieren, nämlich einerseits durch Erzeugung eines Dokuments mit einer Anwendungssoftware (third party software), beispielsweise durch ein Textverarbeitungssystem, ein grafisches Bilderzeugungssystem, einen Büroscanner, der Papiervorlagen abtastet oder dergleichen. Andererseits (legacy application) können bestehende Dokumentendaten in Form eines AFP-Datenstroms (AFP-application) oder eines nicht weiter spezifizierten Format (legacy application) vorliegen. In einer zweiten Verarbeitungsstufe "preparation" werden die jeweiligen Daten für die nachfolgenden Verarbeitungstufen (distribution, printing) aufbearbeitet. Hierzu dient ein Steuerungssystem (SPS), das die drei Verarbeitungsstufen "preparation", "distribution" und "printing" aufeinander abgestimmt in Form eines Produktionsprozesses steuert. Es umfasst die drei Module für die drei Verarbeitungsstufen. Im ersten Modul, dem Bearbeitungsmodul 45 (SPS-CIS), werden die eingehenden Datenströme auf ein einheitliches Format (AFP) normiert, die Daten indiziert, mit Steuerungsdaten angereichert, Resourcendaten erzeugt, eine Umsortierung/Konsolidierung des Datenstroms bewerkstelligt und schließlich die Datenströme ausgabespezifisch segmentiert, so dass die nachfolgenden Verarbeitungsstufen (distribution, printing) mit hoher Geschwindigkeit durchgeführt werden können.

Zur Verteilung der Druckdaten an verschiedene Ausgabekanäle in der Verarbeitungsstufe "distribution" dient ein Verteilungsmodul "SPS-Router" 80. Mit dem Verteilungsmodul 80 lassen sich die Daten wahlweise Systemen zum elektronischen Versand, beispielsweise per E-Mail, in einem e-commerce-Modul 81 zuführen, einem Anzeigemodul 82 (Onlinebrowsing), einem Archivsystem 83 oder Druckproduktionssystemen 84a, 84b, 84c. Dabei können insbesondere spezielle Drucksysteme zur Ausgabe der Druckdaten in einem Netzwerk (insbesondere ein über das Internet verbundene Netzwerk von Druckgeräten) 84c oder über ein lokales, an einem bestimmten Standort befindliches zentrales Drucksystem 84b verwendet werden. Die Prozessstufen der Bearbeitung, der Verteilung und ggf. des Ausdruckens werden von den Überwachungsmodulen 87c überwacht.

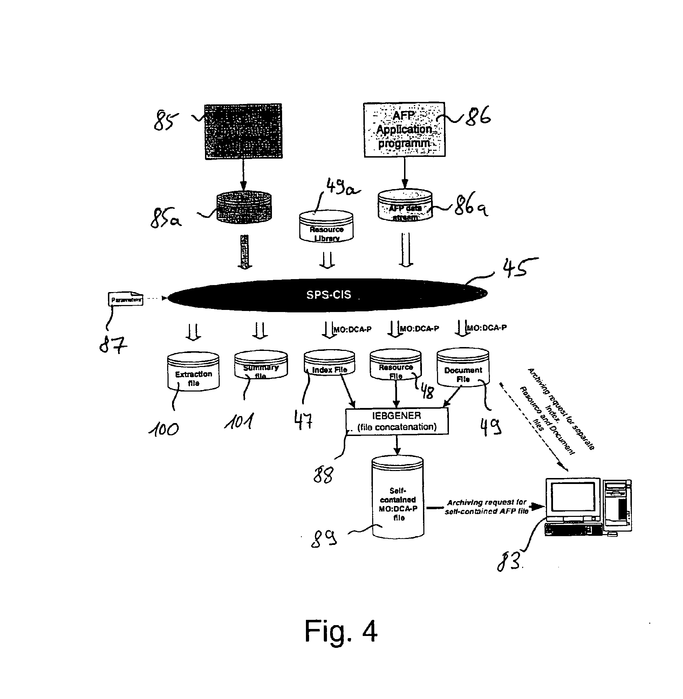

In Figur 4 sind die vom Bearbeitungsmodul 45 (SPS-CIS) geleisteten Dokumentendatenbearbeitungsschritte übersichtsartig dargestellt. Druckdaten werden von einem unspezifizierten Anwenderprogramm 85 (Legacy Application Program) in Form von S/370 line-data (Block 85a) in das Bearbeitungsmodul 45 eingespielt. Aus einem AFP Anwenderprogramm 86 heraus wird entsprechend ein AFP-Datenstrom 86a übertragen. In diesem Fall wird regelmäßig auch eine Resourcenbibliothek 49 übernommen, die Resourcen (overlays etc.) gemäß den Advanced-Function-Presentation-Spezifikationen enthält. Die Datenbearbeitungsvorgänge im Bearbeitungsmodul 45 werden mit Parametern 87 gesteuert, die von aussen in das System einlesbar oder eingebbar sind.

Mit dem Bearbeitungsmodul 45 werden fünf Dateien erzeugt, in denen jeweils die Ergebnisse der Bearbeitung zusammengefasst sind. In einer ersten Dateigruppe sind Index-Daten 47, Resourcendaten 48 sowie Dokumentendaten 49 in einem produktionsangepassten Datenstromformat (MO: DCA-P) abgelegt. Diese Daten werden in einem Verkettungsvorgang 88 miteinander verkettet und ein bearbeiteter Dokumentendatenstrom 89 gebildet, der an die Ausgabesysteme, z. B. an das Archivsystem 83 übertragbar ist. Aus dem Archivsystem 83 können verschiedene Anfragen an das System gestellt werden, durch die entweder der bearbeitete Druckdatenstrom 89 und/oder separate Daten wie die Index-Daten 47, die Resourcendaten 48 oder einzelne der teilbearbeitenden Dokumentendaten 49 abgerufen werden.

Des weiteren wird mit dem Bearbeitungsmodul 45, gesteuert von den Parametern 87, eine Extraktionsdatei 100 und eine Statistikdatei 101 (summary file) gebildet. In der Extraktionsdatei 100 sind vorbestimmte Daten eines Dokuments, eines Mail-Pieces, eines Blattes oder einer Seite gemeinsam mit den jeweiligen Kenndaten der entsprechenden Dateneinheit (Dokument, Mail-Piece, Blatt oder Seite) abgespeichert.

In der Statistikdatei 101 sind, ebenfalls gesteuert durch die Parameter 87, statistische Angaben über den Gesamtdruckdatenstrom eines Auftrages, beispielsweise die Anzahl der Seiten eines Dokuments abgelegt.

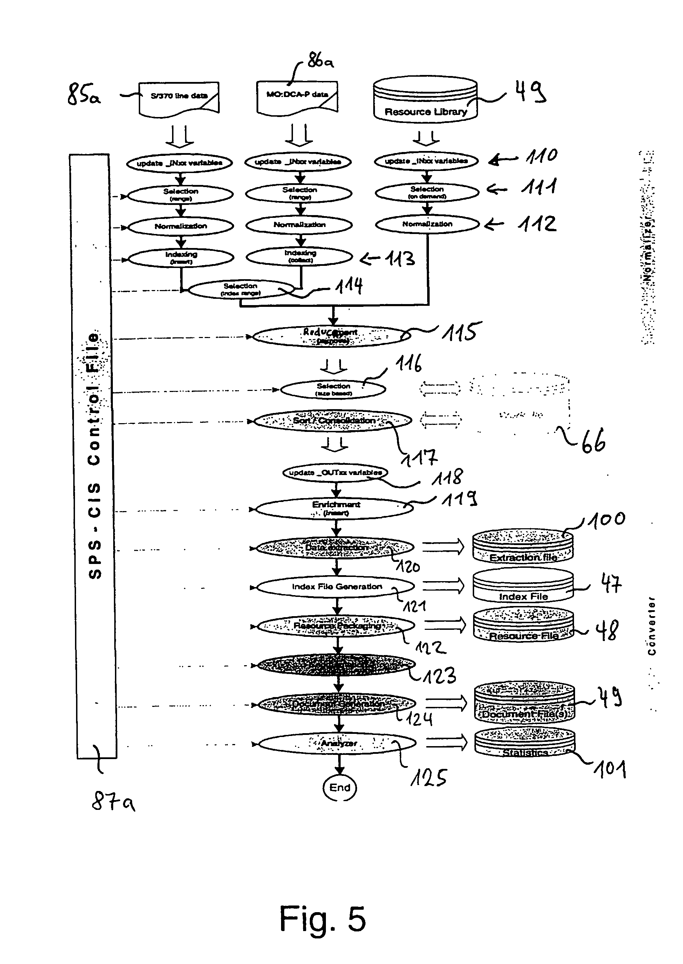

In Figur 5 ist der Prozessablauf dargestellt, welcher innerhalb des Bearbeitungsmoduls 45 (SPS-CIS) im Zuge des Normalisierungsprozesses und des Konvertierungsprozesses abläuft. Eingehende Datenströme 85a, 86a, 49 werden dabei jeweils in einem Schritt 110 untersucht und die dabei gefundenen Steuerungsinformationen in einer Eingangsvariablen-Datei abgespeichert. Durch die Speicherung der Eingangs-Variablen kann vom Bearbeitungssystem 45 jederzeit die Charakteristik des originalen eingegangenen Druckdatenstroms reproduziert bzw. festgestellt werden, unabhängig davon, ob in den weiteren Verarbeitungsstufen Daten ausgewählt, eingefügt und/oder entfernt worden sind. Dies gilt sowohl für Dokumentendaten als auch insbesondere für Steuerungsdaten.

Im Schritt 111 werden aus dem Datenstrom diejenigen Daten ausgewählt, die zur Bearbeitung des Gesamtauftrags benötigt werden. Bei dieser Art der Bereichsauswahl kann unterschieden werden zwischen direkten Dokumentenbereichen (beispielsweise Mail-pieces Nummern 501 bis 1499 und Nummer 601 bis 2000) und andererseits einer Größenauswahl, z. B. einer Auswahl anhand von absoluten Seitennummern, die einem im übrigen offenen Dokumentenbereich enthalten sind. Ausserdem werden fehlende Resourcen in Resource libraries gesucht und in das Bearbeitungssystem eingelesen, um diese Daten der ausgangsseitigen Resourcendatei 48 zuzuführen (selection on demand).

Im nachfolgenden Normalisierungsschritt 112 werden die eingehenden Daten in ein einheitliches, systemvorgegebenes Datenformat und in eine einheitliche Syntax transformiert. Auch dieser Vorgang wird gesteuert durch die im Parameterspeicher 87a hinterlegten Steuerungsparameter. In einem Schritt 113 werden diejenigen Indizes, die bereits in den eingehenden Datenströmen 85a bzw. 86a enthalten sind, zwischengespeichert. Im Schritt 114 werden Parameter gesteuert und diejenigen Indizes ausgewählt, die für spätere Datenausgabe bzw. Datenverarbeitungsschritte noch benötigt werden. Durch das Einfügen von Indizes in einfache, relativ unstrukturierte S/370 Zeilendaten wird ein dem AFP-Standard entsprechender, hierarchisch strukturierter Datenstrom geschaffen, durch den jedes Dokument in sich strukturiert ist. Dies ist die Voraussetzung für die nachfolgenden, im Steuerungsmodul 45 durchgeführten Funktionen, wie Datenerweiterung, Sortierung, Segmentierung usw.

Ein weiterer Auswahlschritt, der an eingehenden Druckdaten vorgenommen werden kann, ist die Auswahl von Dokumenten anhand ihrer Indexinhalte (index-range-selection). Dabei werden nur solche Dokumentendaten weiterverarbeitet, deren Indexangaben innerhalb dem ausgewählten Index-Bereich liegen. Alle anderen Dokumentendaten werden nicht weiterverarbeitet und nicht in die ausgangsseitige Dokumentdatei 49 des Bearbeitungssystems 45 übernommen.

Im Verarbeitungsschritt 115 werden aus den vollständigen Daten, die sowohl die variablen Daten 85a, 86a als auch Resourcen-Daten 49 enthalten, diejenigen Datenparameter gesteuert entfernt (removal), die für die weiteren Bearbeitungsstufen nicht mehr benötigt werden. Durch diese Datenreduktion können insbesondere derartige Daten, die mit vielen unnötigen Steuerungsdaten überfrachtet sind, wesentlich reduziert werden, so dass die nachfolgenden Verarbeitungsschritte weniger aufwendig und damit schneller vollzogen werden können.

Auch Resourcen-Daten, die mehrfach vorkommen (z. B. innerhalb eines MO: DCA-P Datastreams) werden aus dem Datenstrom entfernt, um ihn von redundanten Informationen zu befreien. Dabei ist insbesondere vorgesehen, inlineresourcen aus dem Datenstrom zu extrahieren und diese Resourcen-Daten zusammenzuführen mit den anderen (externen) Resourcen 49.

Im Schritt 116 werden die Druckdaten hinsichtlich ihrer bereichsweisen Größe, d.h. pro Druckauftag, pro Dokument, pro Sendung (mail piece) oder pro Blatt untersucht. Die Daten werden getrennt, und in zwei Teilbereiche aufgespalten, wenn sie eine vorbestimmte Maximalgröße überschreiten. Die aufgespaltenen Zwischendateien werden in einen Arbeitsspeicher 66 zeitweise übertragen. Anschließend erfolgt im Schritt 117 eine Umsortierung des Datenstroms nach vorgegebenen Sortierregeln. Dabei werden die vorhandenen Indizes genutzt. Im Schritt 118 werden alle systeminternen Variablen als ausgangsseitige Variablen gespeichert bzw. deren Werte aktualisiert, beispielsweise Dokumentennummern, Sendungsnummern (mail piece numbers), Gesamtseitenzahl usw..

Die Zerteilung des Datenstroms gemäß dem Verfahrensschritt 116 ist unter folgenden Dokumenten-Produktionssituationen vorteilhaft:
- Während einer Auftragsplanung (Job-scheduling), insbesondere wenn Sendungen (mail pieces) aufgrund ihrer Größe ausgewählt oder ausgeschlossen werden sollen, beispielsweise weil eine Einfügevorrichtung (inserter device) oder eine Heftungseinrichtung (stitcher) nur eine maximale Zahl von Blättern pro Mail-piece bzw. Dokument verarbeiten kann.
- während Wiederholdruckvorgängen, wenn bestimmte Dokumente, Sendungen (mail pieces), Blätter neu gedruckt werden müssen, (beispielsweise weil ein nachfolgender Verarbeitungsschritt wie das Drucken fehlerhaft war) und eine neue Barcode-Steuerungsinformation eingefügt werden muß, um das nachgedruckte Dokument vom zuerst fehlerhaft gedruckten Dokument unterscheiden und korrekt in den Produktionsablauf einfügen zu können.
- während Testphasen oder Überwachungskontrollvorgängen, wenn zufällig ausgewählte Seiten bearbeitet werden sollen.

Die Festlegung der ausgewählten Teilgröße in dem Verarbeitungsschritt 116 erfolgt insbesondere durch Vorgabe einer maximalen Anzahl von Blättern die von einem bestimmten Bereich des Dokumentendatenstroms (Dokument, Mail-piece, Blatt oder Seite) eingenommen werden darf. Typischerweise werden hier Parameter über maximale Blattzahlen angegeben. Diese Parameter können jedoch auch zusätzlich gesteuert werden, je nach der Blattart (z. B. des Papiergewichts bei Einzelblättern), so dass die Auswahl der Arbeitspakete optimal an die nachfolgenden Systemparameter angepasst ist. Im Schritt 119 fügt das Bearbeitungssystem 45 zusätzliche Daten in den Datenstrom ein. Dabei werden insbesondere Barcodes direkt in die Dokumentendaten eingefügt, die fest mit dem Dokument verbunden und ggf. auch ausgedruckt werden. Die Barcode-Daten eines Datenabschnitts (Dokument, Mail-piece, Blatt, Auftrag) werden insbesondere jeweils auf der ersten Seite und auf der letzten Seite des zugehörigen Abschnitts aufgedruckt. Zusätzlich kann jeweils am Anfang und/oder am Ende des Abschnitts eine Leerseite eingefügt werden, auf der dieser Barcode und/oder zusätzliche Angaben zu dem jeweiligen Abschnitt im Klartext aufgedruckt werden.

Diese zusätzlichen Daten dienen insbesondere zur Überwachung des Druckproduktionsprozesses und/oder für die Steuerung von nachfolgenden Verfahrensabläufen bzw. Geräten. Neben Barcode-Strukturen (BCOCA) können auch Textblock- Strukturen (PTOCA), Indizierungsinformationen oder andere, geeignete Steuerungsinformationen eingefügt werden. Die Einfügung kann auf allen verschiedenen Dokumentenebenen (Seite, Blatt, Mail-Piece oder Dokument) erfolgen. Auch benutzerdefinierte Zeichen sowie systeminterne Variablen können in diesen Prozess eingefügt werden und dazu benutzt werden, die Steuerungsdaten einzufügen. Durch das Einfügen der Steuerungsdaten kann der nachfolgende Produktionsablauf optimiert werden, weil die eingefügten Daten exakt auf den nachfolgenden Prozess bzw. die daran beteiligten Geräte abgestimmt sind.

Im Verarbeitungsschritt 120 werden, durch Parameter gesteuert, Daten aus dem Datenstrom herausgefiltert (data extraction), die für bestimmte Weiterverarbeitungen benötigt werden. Durch das Erzeugen einer Extraktionsdatei 100 stehen diese Daten zugriffsoptimiert bereit, weil die Extraktionsdatei 100 einen vergleichsweisen geringen Umfang hat. Diese Daten können daher zur Echtzeit-Kontrolle aller beteiligten Geräte im gesamten Produktionssystem 1 verwendet werden.

In den Schritten 121 und 122 werden aktuelle Indexdaten erzeugt und die für den Druckauftrag benötigten Resourcen gepackt und die jeweiligen Daten in Dateien 47, 48 abgespeichert.

Der Segmentierungs-Schritt 123 dient dazu, die verbleibenden Dokumentendaten parametergesteuert zu segmentieren, beispielsweise Segmente von jeweils maximal 1000 Blatt zu bilden. Diese Segmente stehen.in engem Zusammenhang mit den Steuerungsdaten (Barcodes) die im Schritt 119 eingefügt werden, so dass jedes Segment jeweils am Anfang und am Ende Barcode-Daten zum Ausdruck erhält. Hierdurch kann insbesondere die manuelle Weiterverarbeitung in nachfolgenden Prozessgeräten unterstützt werden, weil die Barcodes mit Hand-Barcodelesern zuverlässig am Anfang und am Ende des Stapels (Druckgut 23) ablesbar sind.

Im Schritt 124 werden die Dokumenten-Dateien 49 gebildet und abgespeichert. Schließlich läuft parallel zu allen Abläufen eine Datenanalyse 125. Dabei werden alle für statistische Zwecke benötigten Daten aufgesammelt und eine Statistik-Datei (summary file, statistic file) 101 gebildet.

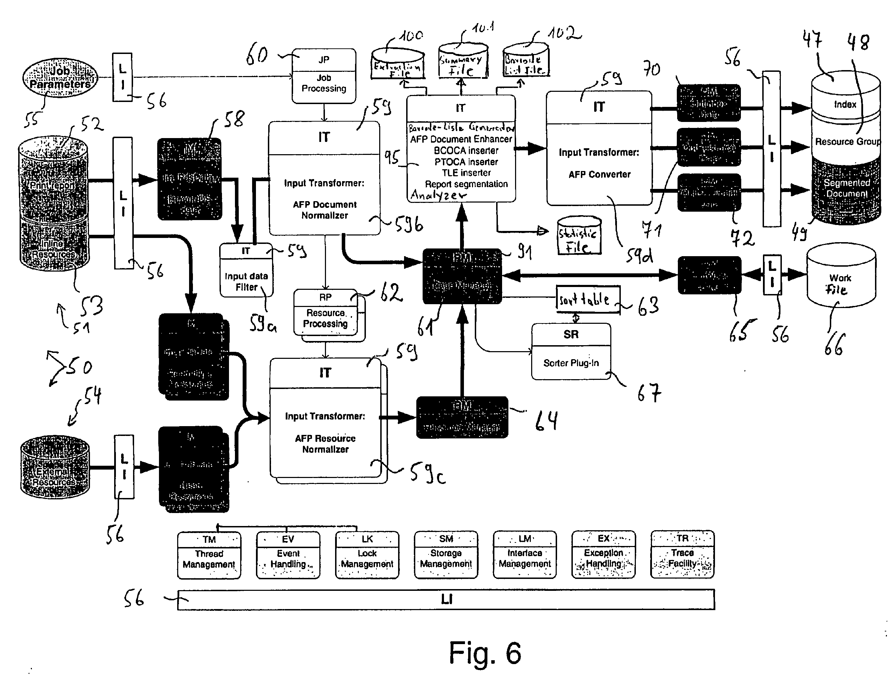

In Figur 6 sind Software-Systemkomponenten und deren funktionelles Zusammenwirken sowie dabei erzeugte Dateien gezeigt, die den in Figur 5 gezeigten Verfahrensablauf bzw. die dort gezeigten Veränderungen der Dokumentendaten bewirken. Das Verfahren und die Systemkomponenten laufen vorzugsweise im Bearbeitungscomputer (File Server) 4 ab, können aber auch in einem anderen Computer wie z.B. im Host-Computer 3 oder im Überwachungscomputer 7a ablaufen. Ein eingehender Druckdatenstrom 50 wird dabei zunächst klassifiziert in einen Primärdatenstrom 51 und einen externen Ressourcendatenstrom 54. Der Primärdatenstrom 51 enthält variable Druckdaten 52 (Print-Report-Data) und integrierte Ressourcendaten 53 (Inline-Resources), während der externe Ressourcendatenstrom 54 lediglich externe Ressourcen (external resources) enthält.

Die eingehenden Druckdaten sowie auftragsspezifische Jobparameterdaten 55 (Block "Job Parameters") werden über ein logisches Interface 56 (LI) in das Konvertierungs-, Indizierungs- und Sortierungssystem 57 (CIS) eingelesen. Das logische Interface 56 wirkt dabei wie eine übergeordnete Prozeßsteuerung, die die verschiedenen Einzelprozesse kontrolliert, freigibt und notfalls blockiert. Das logische Interface 56 weist dazu eine Reihe von Untermodulen auf, die in Figur 6 unten dargestellt sind, nämlich ein Modul der Prozeßsteuerung (threat management, TM), ein Modul zur Steuerung von Ereignissen (event handling, EV), ein Modul zur Koordination der Speicherzugriffe verschiedener Prozesse (lock management, LK), ein Speichermanagementmodul (SM), ein nicht-systemspezifisches Interface-Management-Modul (LM), ein Modul zur Behandlung von Ausnahmezuständen (EX) und ein Modul zur Steuerung von Statusinformationen (trace facility, TR). Das logische Interface 56 ist dabei systemspezifisch gestaltet, d.h. an das übergeordnete Betriebssystem wie MVS, BS 2000, UNIX oder Windows NT, angepaßt. Die übrigen, in Figur 6 gezeigten Systemkomponenten sind betriebssystemunabhängig, so dass durch Anpassung des logischen Interfaces 56 ein einfacher Wechsel von einem ersten Betriebssystem zu einem zweiten Betriebssystem möglich ist.

Zum Import eines ankommenden Druckdatenstromes dient ein Importmodul 58 "im_PdsData". Die eingelesenen Daten werden in einem Eingangstransformationsmodul 59 bearbeitet, wobei die variablen Daten 52 in einem Prozeß 59a zunächst gefiltert, im Prozeß 59b - gesteuert durch die vom Jobprozessor 60 bereitgestellten, auftragsspezifischen Parameter 55 - auf ein internes AFP-Datenformat normalisiert werden und schließlich an das Seitenverarbeitungs-Modul 61 (page manager) übergeben werden.

In den Jobparametern 55 sind die Werte aller Parameter enthalten, die zur Normalisierung, Indizierung, Sortierung und Konvertierung des Druckdatenstromes benötigt werden. Durch die vom Jobprozessor 60 an das EingangsTransformationsmodul 59 gelieferten Prozeßdaten sind alle Informationen im System bekannt, die zum Indizieren des primären Datenstromes benötigt werden - soweit dieser nicht bereits eingangsseitig indiziert ist - und die zum Sortieren des Primärdatenstromes 52 benötigt werden.

Während dem Normalisieren der variablen Daten 52 im Prozeß 59b werden bereits bestehende Indexinformationen - insbesondere bei Primärdaten, die bereits im AFP-Druckdatenformat vorliegen - identifiziert und aufbereitet, um eine Sortiertabelle 63 erstellen zu können.

Im Zuge der Normalisierung im Verarbeitungsprozeß 59b werden Primärdaten, die nicht bereits im AFP-Druckdatenformat vorliegen, z.B. S/370 Line-Daten, in das Druckdatenformat AFP umgesetzt (konvertiert) und entsprechend der vom Jobprozessor 60 bereitgestellten Parameterwerte Indexinformationen in den AFP-Druckdatenstrom eingefügt. Diese Indexinformation wird später ebenfalls zum Aufbauen der Sortiertabelle 63 vom Seitenverarbeitungs-Modul 61 verwendet.

Im Zuge des Normalisierungsprozesses 59b wird auch festgestellt, welche Ressourcen dem primären Druckdatenstrom 52 zuzuordnen sind und durch Meldung über die Ressourcenverarbeitungseinheit 62 ein entsprechender Normalisierungsprozeß für die betreffenden Ressourcen im Schritt 59b gestartet. Jede Ressource - z.B. Zeichensätze, Wasserzeichen (overlays) oder Seitensegmente - welche im Primärdatenstrom benötigt wird, bewirkt dabei einen Normalisierungsprozeß der entsprechenden Ressource. Das gesamte System ist dabei als Mehrprozeßsystem ausgelegt, so daß sowohl die Normalisierung des Primärdatenstromes als auch die parallele (gleichzeitige) Normalisierung mehrerer Ressourcendaten erfolgen kann. Jeder benötigte Ressourcedatensatz wird dabei unabhängig von den anderen Ressourcedatensätzen normalisiert und zwar jeweils nur einmal, unabhängig davon, wie oft die betreffenden Daten des Ressourcendatensatzes in den Primärdaten eines Druckauftrages (job) benötigt werden.

In den Jobparameterdaten 55 kann dabei angegeben werden, welche externen Ressourcendaten 54 (ressource data library) für den jeweiligen Druckauftrag benötigt werden.

Die im Prozeßschritt 59c normalisierten Ressourcedaten werden durch das Ressourcemanager-Modul 64 und das Seitenverarbeitungs-Modul 61 (Page Manager) direkt dem AFP-Konvertierungsprozeß 59d zugeführt und als fertiger Ressourcendruckdatenstrom 71 (Out Resource Data) über das logische Interface 56 in der Ressourcen-Datei 48 abgelegt.

Die im Schritt 59b normalisierten primären Daten werden über den Seitenverarbeitungs-Modul 61, ein Auslagerungsmodul 65 (Outwork Data) und das logische Interface 56 in einen temporären Datenspeicher 66 (z.B. random access memory, RAM) zwischengespeichert. Die zugeordneten Informationen über die Position der zwischengespeicherten Daten relativ zu anderen Daten (Seite, Blatt oder Dokument) ist in dem temporären Datenspeicher abgelegt und zusätzlich als korrespondierender Eintrag in der Sortierungstabelle 63 hinterlegt. Das Seitenverarbeitungs-Modul 61 übernimmt dabei eine zentrale Steuerungs- und Koordinierungsaufgabe für die Zuordnung, Zwischenspeicherung und Sortierung der primären, variablen Daten.

Die Sortierung nach Maßgabe der Sortierungsparameter des Jobs erfolgt dann durch das Sortierungsmodul 67 unter Verwendung der Sortierungstabelle 63 und unter Vermittlung des Seitenverarbeitungsmoduls 61.

Über die Einträge in der Sortierungstabelle können die variablen Daten einfach aufgefunden werden, nachdem der Sortiervorgang durchgeführt worden ist.

Der Sortierprozeß im Sortierungsmodul 67 startet erst, nachdem alle zu einem Druckauftrag (job) gehörenden variablen Daten des primären Datenstromes 52 normalisiert worden sind sowie alle für den Druckauftrag benötigten Ressourcendaten entsprechend verarbeitet wurden. Zu diesem Zeitpunkt sind alle Ressourcendaten bereits in der Ressourcendatei 48 abgelegt und alle variablen Druckdaten im Zwischenspeicher 66.

Der Sortierungsprozeß im Sortierungsmodul 67 kann als speicherimmanenter Tabellensortiervorgang innerhalb der Sortierungstabelle 63 durchgeführt werden. Die neue Sortierreihenfolge wird durch den Sortieralgorithmus und durch die Inhalte der Indexeinträge bestimmt, welche zum Sortieren benutzt werden. Die im Zwischenspeicher 66 abgelegten variablen Druckdaten können also während des Sortiervorganges völlig unangetastet bleiben.

Sobald der Sortiervorgang beendet ist, werden die Druckdaten aus dem Zwischenspeicher 66 durch das Seitenverarbeitungs-Modul 61 abgerufen, wobei die Abrufreihenfolge auf der Basis der neuen Sortierreihenfolge in der Sortierungstabelle 63 durchgeführt wird. Auf diese Weise werden Seiten, Blätter und Dokumente entsprechend der neuen Sortierreihenfolge aus dem Zwischenspeicher 66 abgerufen, durch den Seitenverarbeitungs-Modul 61 der Konvertierungsstufe 59d zum Erzeugen des Ausgangs-Druckdatenstromes 72 (Out Document Data) und zur Ablage in der Dokumentdatei 49 weitergeleitet. Schließlich wird durch das Seitenverarbeitungs-Modul 61 aus der Sortiertabelle 63 auch ein neuer Indexdatenstrom 70 (Out Index Data) erzeugt und dieser in der Indexdatei 47 abgelegt. Offset-Werte und -Orte der Indexdaten in der Indexdatei 47 entsprechen den Offset-Werten und -Orten der Daten in der Dokumentdatei 49.

Zwischen dem Pagemanager 91 und der Ausgangs-Konvertierungsstufe 49d ist eine Funktionsstufe 95 geschaltet, die folgende Untermodule enthält:

Mit einem Datenergänzungsmodul können dem Ausgangs-Druckdatenstrom zusätzliche Daten (Informationen) hinzugefügt werden, die vorher nicht im Druckdatenstrom enthalten waren. Diese Funktionsstufe kann optional aufgerufen werden, d.h. je nach vorgegebenen Jobparametern können folgende Zusatzinformationen eingefügt werden:
- spezielle, AFP-spezifische Informationen, die den Datenfluß weiter verbessern,
- kundenspezifische Informationen (data inserter) wie Barcode-Objekte (BCOCA), Textattribute (PTOCA) und index tags.

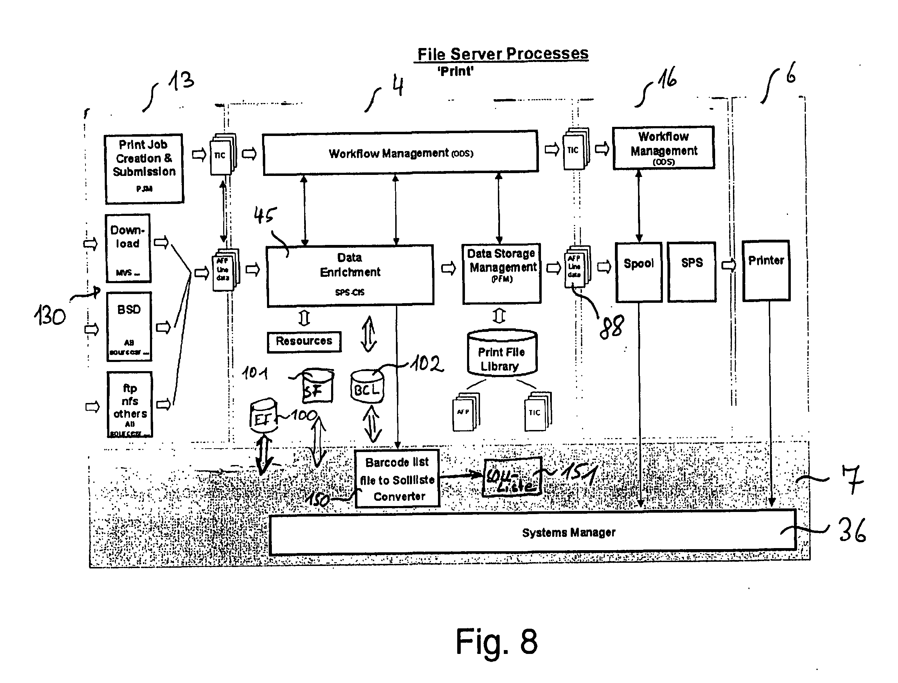

Die Funktionsstufe 95 enthält somit mehrere Module, die jeweils untereinander separat ablaufen und die entsprechenden Verfahrensschritte, welche in Figur 5 gezeigt waren, ausführen. Dazu zählen ein Dokumentenverbesserungsmodul, durch den Daten eingefügt oder entfernt werden, Module zur Einfügung von Steuerungsdaten (Bar Codes BCOCA, Texte PTOCA oder Tag Steuerungsinformation TLE). Des weiteren enthält sie ein Segmentierungsmodul sowie ein Datenanalysemodul. Schließlich enthält sie auch auch einen Generator für eine Bar-Code Liste, der den erzeugten Bar-Codes entsprechend eine Listendatei bildet. Diese Listendatei ist insbesondere vom Überwachungsmodul 7 zu nutzen, wie auch anhand Figur 8 näher erläutert wird.

Ausgangsseitig sind die Dokumenten-Dateien 49 segmentweise voneinander getrennt, so daß eine segmentweise Verarbeitung in einem Nachverarbeitungsgerät (Druckgerät) oder auch verteilt auf verschiedene Drucksysteme erfolgen kann.

Figur 7 zeigt einen typischen Arbeitsablauf in einem Dokumentendaten-Verarbeitungssystem. Dokumentendaten werden dabei im Anwendernetzwerk 13 erzeugt, dem Bearbeitungssystem 4 zugeführt und auf einem Ausgabegerät 6 ausgegeben. Zur Erzeugung der Eingangsdaten können verschiedene Erzeugungsprogramme (Download, Textverarbeitungssystem etc.) verwendet werden. Die jeweils erzeugten Dateien 131 verschiedener Formate werden einem Printjob-Verarbeitungsystem 132 zugeführt, daß ein Jobticket 133 erzeugt und die übrigen Daten jeweils geeigneten Datenverarbeitungssystemen, insbesondere Filterprogrammen 134, einem Datenkonversionsmodul 135 und/oder einem Datenspeicherungsmodul 136 zuführt, welches die Daten in verschiedenen Dateien, beispielsweise in einem Zwischenspeicher 137 oder einem Archivsystem 83 speichert. Das vom Printjob System 132 erzeugte Jobticket 133 enthält diverse Parameter, die alle Prozesse beschreiben, um den zugehörigen Auftrag im Bearbeitungssystem 4 abzuarbeiten. Ein Auftrag besteht somit aus einem Set von Dokumentendaten und den Daten des Jobtickets 133. Dieses Jobticket 133 wird einem Auftrags-Überwachungssystem (ODS, order distribution system) 138 zugeführt, welches die im Bearbeitungscomputer 4 ablaufenden Prozesse steuert und überwacht.

Das Auftragsüberwachungssystem 138 identifiziert die Parameter innerhalb des Jobtickets und kontrolliert jeden ablaufenden Prozess im Bearbeitungssystem 4 unabhängig davon, wo die jeweiligen Daten physikalisch innerhalb des Systems gerade gespeichert sind. Dadurch ist es möglich, den Prozessablauf des Bearbeitungssystems 4 über mehrere verschiedene physikalische Einheiten (z.B. Personal Computer) zu verteilen. Jeder Prozess wird durch eingehende und ausgehende Daten beschrieben. Das Auftragsüberwachungssystem 138 sorgt für den ordnungsgemäßen Eingang und den ordnungsgemäßen Ausgang dieser Dateien.

Nachdem die Daten gefiltert, verarbeitet und/oder je nach Bedarf in neue Formate wie IOCA oder TIFF umgewandelt sind, werden sie anschließend Ausgabesystemen 140 wie einem Anzeigeprogramm, einem Speicher, einem Spoolingssystem 141 bzw. Druckern 6 zugeführt.

In Figur 8 sind die Arbeitsabläufe und zugehörigen Systemkomponenten gezeigt, mit denen ein Druckauftrag verarbeitet wird. Die im Netzwerk 13 erzeugten Druckdaten 130 werden im Bearbeitungssystem 4 mit der Bearbeitungskomponente 45 (vgl. Figuren 4-6) bearbeitet. Dabei werden die Datenauszugs-Datei 100, die Statistik-Datei 101 und die Bar-Code Datei 102 gebildet. Aus der Bar-Code Datei 102 erzeugt die Überwachungssystemmittels des Systemsmanagers 36 bzw. eines davon aufgerufenen Konvertierungsmoduls 150 eine Soll-Liste 151, die im Überwachungssystem 7 abgespeichert wird. Anhand dieser Soll-Liste ist der Gesamtprozess des Druckens durchgängig über alle beteiligten Geräte (print server 16, Drucker 6 und ggf. Nachverarbeitungsgeräte 22) überwachbar. Damit lassen sich geräteweise in Echtzeit die jeweiligen Produktionsschritte überwachen und sofort eine Fehlermeldung bzw. Eingriffsmöglichkeit realisieren, um den Druckprozess zu steuern. Wie bereits zu den vorhergehenden Figuren beschrieben, werden die Steuerungsinformationen (Bar-Codes) nicht nur in der Soll-Liste 150 verarbeitet, sondern diese Steuerungsdaten auch dem Ausgabe-Druckdatenstrom 88 hinzugefügt, so daß sie auch auf den jeweiligen Dokumenten gedruckt werden. Dies ermöglicht wiederum das Abtasten der Steuerungsinformation (Bar Codes) vom Dokument mittels Bar-Code Scanner und die Überwachung des tatsächlich gedruckten Dokuments durch das Überwachungssystem 7.

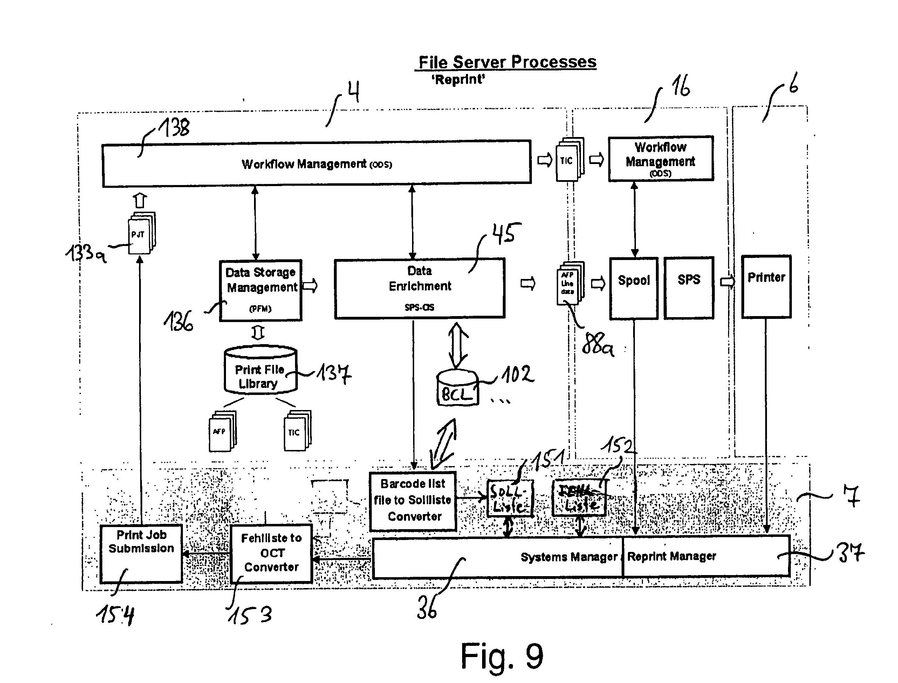

In Figur 9 ist ein vollautomatischer Nachdruck-Vorgang gezeigt. Sobald der Systems Manager 36 im Überwachungssystem 7 feststellt, daß im Druckproduktionsprozeß ein Dokument nicht oder nur fehlerhaft verarbeitet wird, insbesondere weil ein Dokument, das in der Soll-Liste geführt ist, an einem System nicht dedektiert wird, so generiert der Systems Manager 36 einen entsprechenden Eintrag, der für dieses Dokument bzw. für dieses Mail Piece bzw. für diese Seite in der Fehl-Liste 152 gilt. Dann ruft der Systems Manager 36 den Reprint Manager 37 auf, der den Nachdruck steuert. Er erzeugt aus den Einträgen der Fehl-Liste 152 mittels des Konverter-Moduls ein sog. Reprint Jobticket OCT. Danach ruft der Reprint Manager in einem Schritt 154 den Print Job Manager 132 auf, der wiederum ein systeminternes Print Job Ticket 133a generiert und dieses an das Order Distribution System 138 sendet und das Erzeugen eines neuen Nachdruck-Datenstroms 88a veranlaßt.

Das Bearbeitungsmodul 45 arbeitet dazu mit dem Print File Manager 136 zusammen, der aus dem Zwischenspeicher 137 die angeforderten Daten erneut entnimmt und diese Daten dem Bearbeitungsmodul 45 zuführt. Dort werden dem Datenstrom wiederum neue Steuerungsdaten (Bar-Codes) hinzugefügt, die das nachgedruckte Dokument kennzeichnen, und zusätzlich einen Eintrag enthalten, aus dem deutlich wird, daß diese Daten Bestandteil eines Nachdruck-Auftrags sind. Außerdem speichert das Bearbeitungssystem 45 diese neuen Nachdruck-daten auch in der Bar-Code Datei 102, aus der wiederum ein entsprechend aktualisierter Eintrag in der Soll-Liste 151 gebildet wird. Dadurch können auch die Nachdruck-Aufträge im System voll automatisch und mit hoher Sicherheit überwacht werden.

Abschließend werden die so erzeugten Nachdruck-Daten 88a wiederum an den Druckserver 16 ausgegeben, der aus diesem Datenstrom einen direkt für den Drucker 6 lesbaren Datenstrom (z.B. im Intelligent Print Datastream Format IPDS) erzeugt, und diesen an die Druckeinrichtung 6 übermittelt.

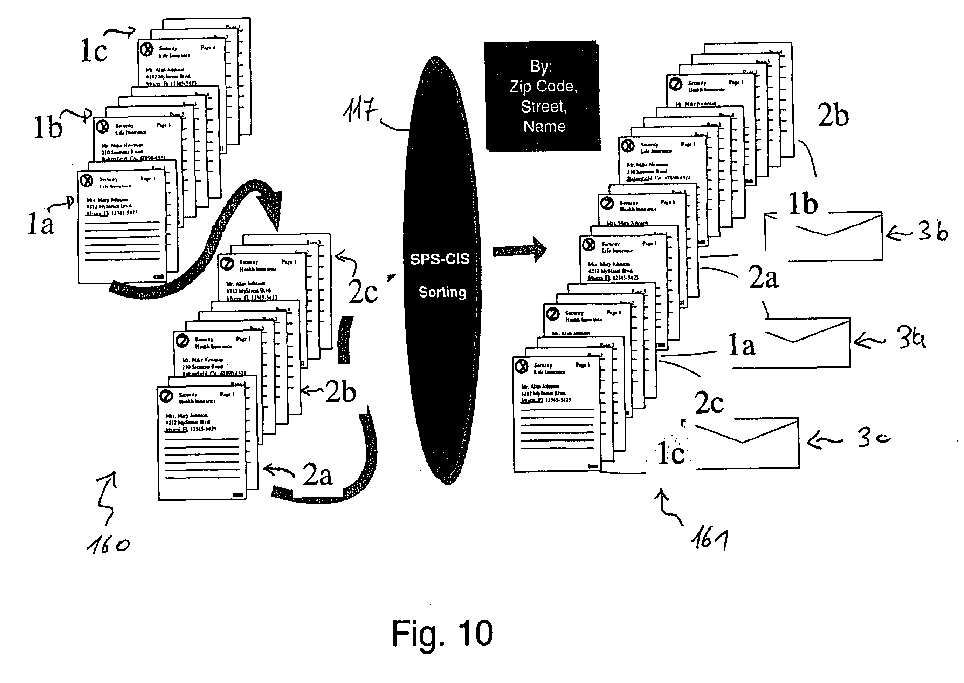

In Figur 10 ist gezeigt, wie anhand des Bearbeitungsmoduls 45 im Schritt 117 aus einem Eingangsdatenstrom 160 ein umsortierter Ausgangsdatenstrom 161 gebildet wird. Ziel dieser Sortierung ist es, im Ausgangsdatenstrom die drei Mail Pieces 3a, 3b, 3c zu erzeugen, in denen jeweils zusammengehörige Dokumente, die an ein und denselben Adressaten versandt werden sollen, gemeinsam in einem Briefkuvert zusammengeführt und dem Postversand zugeführt werden.

Das erste Dokument 1a, das zwei Seiten umfaßt, soll dabei z.B. mit dem zweiten Dokument 2a, welches ebenfalls zwei Seiten umfaßt, zu einem Mail Piece 3a zusammengeführt werden. Die Zusammenführung erfolgt nach dem Kriterium, daß Name und Adresse in den jeweiligen Adreßfeldern der Dokumente übereinstimmen müssen. Die Umsortierung findet dabei wie in Figur 5 beschrieben statt. Weitere Einzelheiten einer solchen Umsortierung sind auch in der eingangs genannten WO 01/77807 A2 und dort insbesondere im Zusammenhang mit Figur 6 beschrieben.

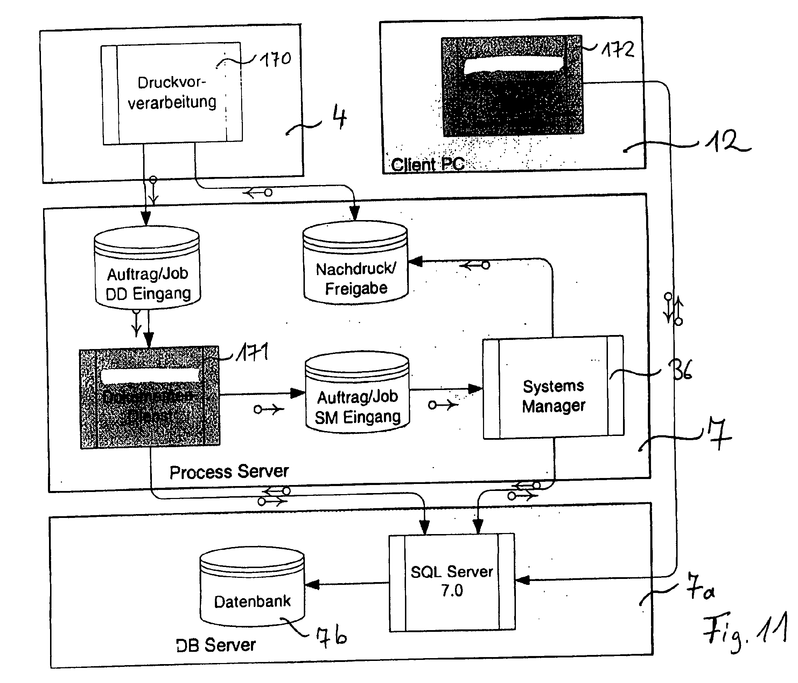

Figur 11 zeigt, wie mit einem erfindungsgemäßen System auch eine Dokumentenverfolgung bzw. Dokumentensuche möglich ist. Im Zuge der Vorverarbeitung von Druckdaten im Bearbeitungscomputer 4 werden dabei die nötigen Informationen für die Verfolgung von Dokumenten (Indizierungsdaten, Soll-Listen und Jobinformationen) sowie die Zuordnung der Sendungen/Dokumente zu den benutzerdefinierten Merkmalen in einer Job-Datei zur Verfügung gestellt. Diese Daten werden im Überwachungscomputer 7 an ein zentrales Dokumentendienst-Modul 171 übermittelt. Dieses Modul speichert die Daten insbesondere in einem speziellen Datenbankservser 7a in einer Datenbank 7b, auf die auch der Systems Manager 36 Zugriff hat. Durch diese Vernetzung der Komponenten ist es möglich, daß von jedem Anwendungscomputer 12, in dem ein entsprechender Dokumenten-Client 172 abläuft, die entsprechenden Dokumentendaten jederzeit abgerufen und das aktuelle Dokument lokalisiert und/oder zur Anzeige gebracht werden kann. Zu jedem Dokument können insbesondere folgende Daten gespeichert sein: Bearbeitungsdatum im Dokumentenproduktionssystem, Jobname, Sendungsnummer, Seitennummern, Nachdrucknummer, Name, Rechnungsnumer, Postleitzahl des Adressaten usw..

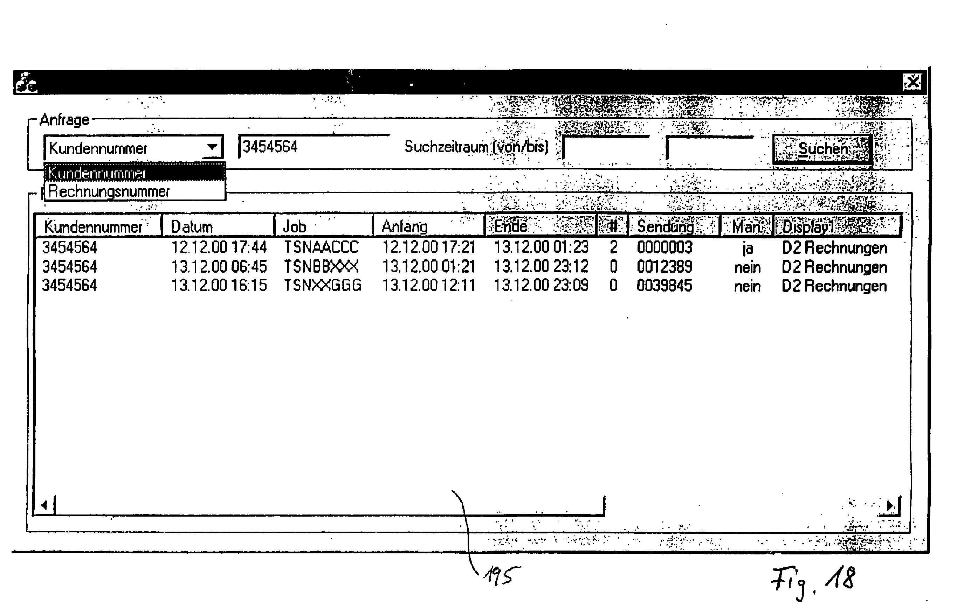

Der Dokumenten-Client 172 ist eine Dialoganwendung, mit der die Suche nach Dokumenten möglich ist, und die Resultate angezeigt werden können. Figur 18 zeigt ein entsprechendes interaktives Anzeigefenster 195.

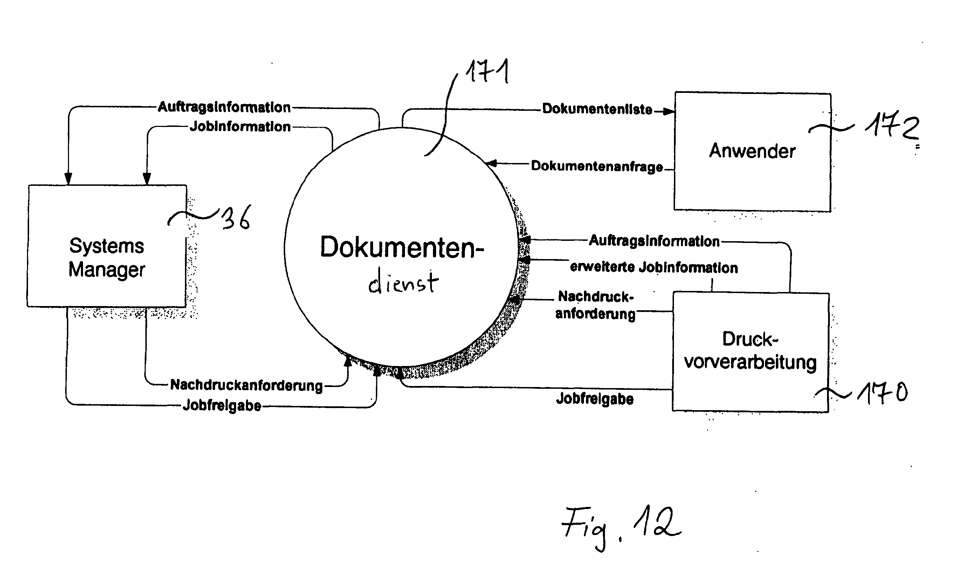

In Figur 12 ist gezeigt, welche Daten der Dokumentendienst mit den anderen beteiligten Komponenten der Druckvorverarbeitung 170, dem Anwenderprogramm 172 und dem Systemsmanager 36 austauscht. Er ist die zentrale Erfassungs- und Verteilungsstelle für alle die Dokumentensuche betreffenden Informationen.

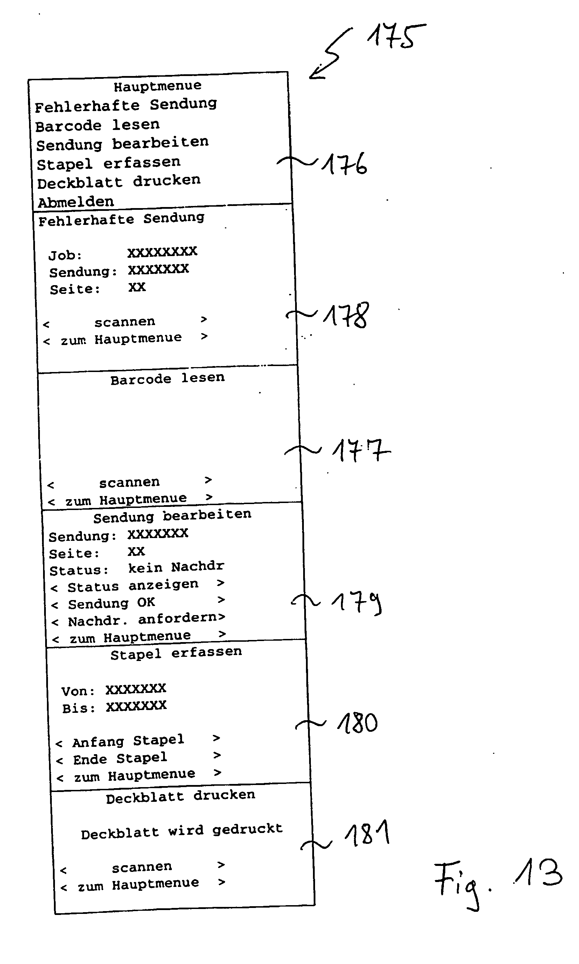

In Figur 13 ist eine Menüstruktur gezeigt, die in einem der Bar-Code Leser 11a 11b zur Anzeige gebracht wird. Aus dem Hauptmenü 176 heraus lassen sich Untermenüs aufrufen, mit denen Steuerungsbefehle in das Dokumentenbearbeitungssystem 1 einschleusbar sind. Dazu dienen neben der Rückmeldung eines aktuell gelesenen Bar-Codes aus dem Menü 177 heraus auch die direkten Steuerungsbefehle 178 zum Scannen und Rückmelden einer fehlerhaften Sendung sowie die Menüpunkte 179 (Sendung bearbeiten), durch die z.B. auch ein Nachdruck einer Sendung angefordert werden kann und 180 (Stapel erfassen) durch den Anfang und/oder Ende eines Stapels gescannt oder festgelegt werden kann sowie das Menü 181, durch das ein Deckblatt für eine Sendung, ein Dokument oder dergleichen ausdruckbar ist.

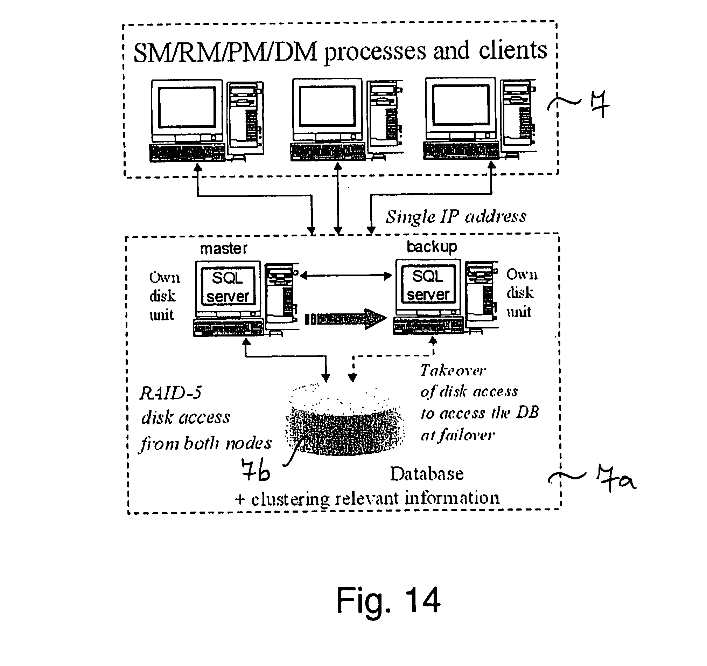

In Figur 14 ist nochmal die Struktur des Überwachungssystems 7 gezeigt, in dem verschiedene Prozesse, wie der Systems Manager, Reprint Manager, Print Manager und Device Manager ablaufen. Diese Prozesse können entweder gemeinsam in einem Computer oder auch verteilt auf verschiedene Computersysteme ablaufen. Sie sind allerdings funktionell derart gekoppelt, daß Daten des einen Systems vom anderen System jederzeit abrufbar sind. Hierzu dient insbesondere die zentrale Verwaltung der Daten in dem Datenbanksystem 7a, das beispielsweise als SQL-Serversystem ausgebildet sein kann.

Das I/O-Modul mit graphischer Benutzeroberfläche 41 (siehe Figur 2), das im Überwachungssystem 7 abläuft, kann eine graphische Darstellung aller Gerätekomponenten des Dokumentenproduktionssystems 1 aufweisen. Durch Auswählen eines Gerätes kann er zu diesem Gerät diverse Statusinformationen sowie Informationen zu allen aktuell an diesem Gerät anstehenden Druckjobs bekommen. Durch den gemeinsamen Zusammenschluß aller beteiligten Komponenten auf dem Server 7 bzw. der Datenbankstruktur 7a direkt in ein anderes Modul einzulesen bzw. das darin zu übernehmen, selbst wenn die Daten hauptsächlich vom anderen Modul verwaltet werden.

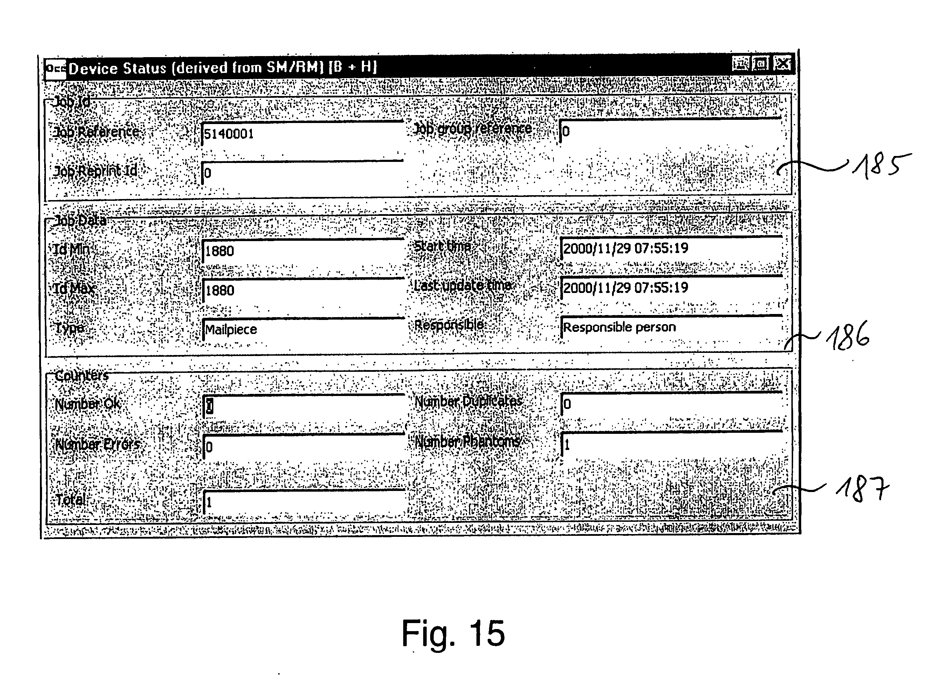

Figur 15 zeigt ein Beispiel, bei dem aus dem Systems Manager 36 heraus Daten des Device-Managers 35 direkt abrufbar sind. In einem Job-ID-Feld 165 werden dabei Identifikationsdaten des aktuell an diesem Gerät bearbeiteten Jobs angezeigt. Im Job-Data-Feld 186 werden relevante Daten wie Umfang, Typ, Start, Zeit und verantwortliche Person angezeigt und im Device-Datenfeld 187 werden aktuelle statistische Daten über das ausgewählte Gerät angezeigt.

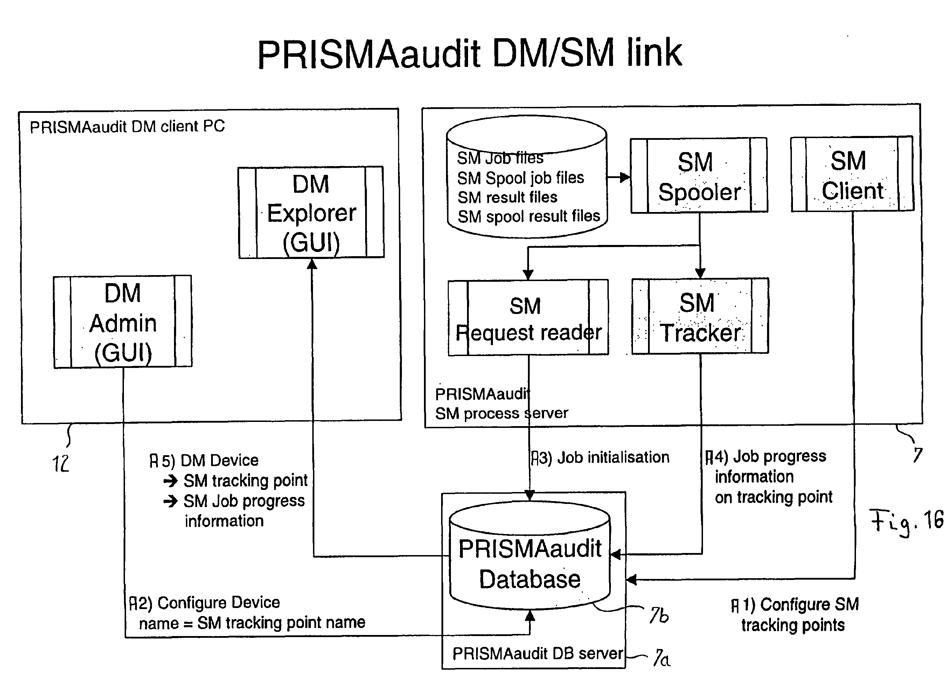

Figur 16 zeigt ein Beispiel, bei dem verschiedene Komponenten des mit PRISMAaudit bezeichneten Gesamtsystems zusammenwirken. Zu den einzelnen Komponenten wird insbesondere auf die Figuren 1, 2 und 15 verwiesen.

Beim gezeigten Beispiel sind im Client-Computer 12 Module des Device Managers DM angeordnet, die jeweils grafische Userinterfaces GUI (graphical user interface GUI) enthalten, wie sie typischerweise im Zusammenhang mit Figur 15 beschrieben wurden. Die Baugruppe Überwachungscomputer 7 enthält verschiedene gezeigte Module des Systems Managers SM. Die Verbindung zwischen dem Client-Computer 12 und dem Überwachungscomputer 7 wird mit Hilfe des Überwachungscomputers 7a über die Datenbank 7b hergestellt.

Zur Konfiguration des in Figur 16 gezeigten Systems und zum Funktionsablauf wird auf folgende Arbeitsabläufe A1 bis A5 verwiesen. Gemäß den Arbeitsabläufen A1 und A2 werden die Device Manager Module DM im Client Computer 12 sowie die Systems Manager Module SM für die Verfolgungspunkte (tracking points) im Überwachungscomputer 7 mit denselben Namen computertechnisch konfiguriert. Gemäß den Arbeitsabläufen A3 und A4 erfolgt die Initialisierung für Aufträge (Jobs) durch die Systems Manager Module SM. Auch die Verfolgung der Aufträge an den verschiedenen Arbeitsstationen erfolgt durch die SM Module. Die Daten über den Fortschritt der Aufträge werden in der Datenbank 7b durch den Datenbank-Server 7a gespeichert. Gemäß dem Arbeitsablauf A5 werden durch die Device Manager Module DM im Client-Computer 12 die von den Systems Manager Module SM des Überwachungscomputers 7 ermittelten Daten an verschiedenen Verfolgungspunkten (tracking points) an den grafischen Userinterfaces (GUI) angezeigt. Ferner wird der Anwender über den Fortschritt des jeweiligen Auftrages infomiert. Beim gezeigten Beispiel kann ein Anwender die den Produktionsprozess abbildenden Daten am Client-Computer 12 wiedergeben und ist somit über den aktuellen Stand des komplexen Produktionsprozesses vollständig informiert.

In Figur 17 ist nochmals die Stop-Funktion beschrieben, welche von System Manager bzw. Reprint Manager an Druck-Nachverarbeitungsgeräte, wie Kuvertierer, gesandt wird, wenn am Kuvertierer eine Sendung bzw. ein Dokument auftritt, die bereits an dem selben oder an einem anderen Kuvertierer bearbeitet wurde. In Figur 17 sind drei Kuvertiergeräte 190a, 190 b und 190 c mit jeweiligen Barcodeerfassungsgeräten 191a, 191 b, 191 c ausgestattet. Die Barcoderfassungsgeräte erfassen jeweils zur Bearbeitung anstehende Sendungen bzw. Dokumente und melden dieses Ergebnis an den Überwachungscomputer 7. In diesem wird an Hand der Datenbank 7b geprüft, ob die Sendung bzw. das Dokument bereits einem Kuvertierer zugefügt wurde. Solche Fälle können dann auftreten, wenn Sendungen einem Nachdruck-Vorgang (Reprint) unterzogen worden sind und die Fehldrukke in vorhergehenden Prozeßstufen nicht ordnungsgemäß beseitigt wurden. In diesen Fällen sendet der Überwachungscomputer 7 ein Stop-Signal an den betreffenden Kuvertierer sowie eine Meldung "Stop durch Überwachungscomputer wegen Duplett". Durch diese Meldung kann der Benutzer erkennen, daß die aktuell anstehende Sendung bereits bearbeitet wurde und kann sie in diesem Bearbeitungsstadium noch entnehmen, damit die Sendung nicht doppelt versandt wird. Derart ausgesteuerte Sendungen können wiederum mit einem Handbarcodeleser erfaßt werden und als ausgesteuert gekennzeichnet werden, so daß auch derartige Produktionsschritte im Produktionsüberwachungssystem erfaßt sind. Ein Arbeitsablauf an einer Schneide- und Kuvertieranlage kann demgemäß folgendermaßen beschrieben werden:
1. Der Bediener spannt das bedruckte Papier in die Schneide- und Kuvertieranlage ein.
2. Der Bediener betätigt eine Leseeinrichtung, die an der Schneideeinrichtung angebracht ist. Aufgrund der gedruckten Auftragsnummer wird eine entsprechende Freigabeanforderung an den Überwachungscomputer gerichtet. Wenn der entsprechende Auftrag verarbeitet werden kann, erteilt der Überwachungscomputer eine Freigabe für einen Bereich von Sendungsnummern.
3. Die Schneide- und Kuvertieranlage wird in eine Betriebsart "Automatik" umgeschalten und die Anlage gestartet. Der in der Schneide- und Kuvertieranlage eingebaute Computer (Client) überprüft für jede verarbeitete Sendungsnummer, ob die gedruckte Auftragsnummer mit dem zuvor vom Überwachungscomputer freigegebenen Nummernbereich übereinstimmt. Wird festgestellt, daß eine aufgedruckte Sendungsnummer außerhalb des freigegebenen Bereichs liegt, so wird die Schneide- und Kuvertieranlage gestoppt und eine entsprechende Fehlermeldung ausgegeben.
4. Für jede verarbeitete Sendung wird das Verarbeitsungsergebnis in einer Resultatsdatei eingetragen. Der Eintrag erfolgt, sobald die Sendung die Schneide- und Kuvertieranlage verläßt bzw. ein Ausgabefach erreicht hat.
5. Die Kuvertierergebnisse werden in Form einer Resultatsdatei an den Reprint Manager des Überwachungscomputers übertragen. Diese Resultatsdatei wird über die Anzahl der erkannten Kennzeichen (Sendungen) oder zeitgesteuert begrenzt. Auch beim Erkennen eines neuen Jobs wird ein Dateiabschluß bewirkt. Jeder Kontrollpunkt liefert seine eigene Resultatsdatei.

Zur Vermeidung von Doppelkuvertierungen, insbesondere bei gleichzeitiger Verarbeitung gesplitteter Jobs an verschiedenen Kontrollpunkten (Schneide- und/oder Kuvertieranlagen) kann die entsprechende Anlage durch ein Stop-Kommmando, das im Reprint Manager erzeugt wird, mit entsprechender Fehlermeldung am Bedienfeld gestoppt werden.

Es wurden Ausführungsbeispiele der Erfindung beschrieben. Dabei ist klar, daß Weiterentwicklungen und Abwandlungen der Erfindung vom Fachmann ohne weiteres angebbar sind. Die Erfindung ist insbesondere dazu geeignet, als Computerprogramm (Software) realisiert zu werden. Sie kann damit als Computerprogramm-Modul als Datei auf einem Datenträger wie einer Diskette oder CD-Rom oder als Datei über ein Daten- bzw. Kommunikationsnetz verbreitet werden. Derartige und vergleichbare Computerprogramm-Produkte oder Computerprogramm-Elemente sind Ausgestaltungen der Erfindung. Der erfindungsgemäße Ablauf kann in einem Computer, in einem Druckgerät oder in einem Drucksystem mit vorgeschalteten oder nachgeschalteten Datenverarbeitungsgeräten Anwendung finden. Dabei ist klar, daß entsprechende Computer, auf denen die Erfindung angewandt wird, weitere, an sich bekannte technische Einrichtungen wie Eingabemittel (Tastatur, Mouse, Touchscreen), einen Mikroprozessor, einen Daten- bzw. Steuerungsbus, eine Anzeigeeinrichtung (Monitor, Display) sowie einen Arbeitsspeicher, einen Festplattenspeicher und eine Netzwerkkarte enthalten können.

### Bezugszeichenliste

- 1a...1c: erste Gruppe von Dokumenten
- 2a...2c: zweite Gruppe von Dokumenten
- 3a...3c: mailpieces (Sendungen)
- 3: Host Computer
- 4: Bearbeitungscomputer (File Server)
- 5: Netzwerk-Architektur
- 6: Ausgabegerät
- 6a...6d: Druckgeräte
- 7: Überwachungssystem
- 7a: Überwachungscomputer
- 7b: Datenbank
- 7c: Computerprogramm-Module
- 8: Print Manager
- 9: Konverter
- 10a, 10b: Lesestation
- 11a, 11b: Hand-Barcodeleser
- 12, 12a: Client-Computer (Anwendernetzwerk)
- 13: Netzwerk für Client
- 14a..14d: Druckdatenleitungen
- 15: Gerätesteuerungsnetzwerk
- 16: Druckserver
- 17: Meßsystem
- 18: Optisches Testsystem
- 19: Barcode Testsystem
- 20: MICR Testsystem
- 21: Datenerfassungsmodul
- 22a: Schneidegerät (Cutter)
- 22b: Kuvertiergerät
- 23: Druckgut
- 24: Spooler

- 35: Device Manager
- 36: Systems Manager
- 37: Reprint Manager
- 38: Print Manager
- 39: Verification Manager
- 40: Resource Manager
- 41: I/O Modul
- 42: Berichts-Modul
- 43: Datenbank Manager
- 45: Bearbeitungs-Modul

- 47: Index-Datei
- 48: Resource-Datei
- 49: Dokument-Datei
- 49a: Resourcenbibliothek (resource library)

- 50: Druckdatenstrom
- 51: Primärdatenstrom
- 52: variable Druckdaten
- 53: Inline-Resourcedaten
- 54: externe Resourcedaten
- 55: Job Parameterdaten
- 56: logisches Interface
- 57: Konvertierungs-Indizierungs-Sortierungs-System
- 58: Import-Modul
- 59: Eingangs-Transformations-Modul
- 59a: Filter-Prozess
- 59b: Normalisierungsprozess
- 59c: Resourcen-Normalisierungsprozess
- 59d: AFP-Konvertierungsprozess
- 60: Job-Prozessor
- 61: Seitenverarbeitungs-Modul (Page Manager)
- 62: Resource-Verarbeitungseinheit
- 63: Sortiertabelle
- 64: Resource Manager
- 65: Auslagerungsmodul
- 66: Zwischenspeicher
- 67: Sortierungsmodul
- 70: Ausgabe-Steuerungsmodul für Index-Daten
- 71: Ausgabe-Steuerungsmodul für Resource-Daten
- 72: Ausgabe-Steuerungsmodul für variable Daten
- 80: Verteilungsmodul (SPS-Router)
- 81: e-commerce-Modul
- 82: Anzeigemodul (Online Browsing)
- 83: Archiv-System
- 84a: Druckproduktionssystem
- 84b: zentrales Druckproduktionssystem
- 84c: Netzwerk-Druckproduktionssystem

- 85: Legacy-Anwenderprogramm
- 85a: line-Daten
- 86: AFP-Anwenderprogramm
- 86a: AFP-Datenstrom
- 87: Steuerungsparameter
- 87a: Steuerungs-Parameter-Datei
- 87c: Überwachungsmodule
- 88: Verkettungs-Vorgang
- 89: Bearbeiteter Dokumentendatenstrom

- 91: Seitenmanagement-Modul

- 95: Datenmodifizierungs- und Analyse-Modul
- 96:

- 100: Extraktionsdatei
- 101: Statistik-Datei
- 102: Barcode-Datei

- 110: Untersuchung des Eingangsdatenstroms
- 111: Datenauswahl
- 112: Datennormalisierung
- 113: Zwischenspeicherung von Eingangs-Indices
- 114: Indexauswahl
- 115: Datenreduktion
- 116: Größenabhängige Selektion
- 117: Sortieren/Konsolidieren
- 118: Ausgabe-Variablen aktualisieren
- 119: Datenerweiterung
- 120: Datenextraktion
- 121: Indexerzeugung
- 122: Resourccen-Verpackung
- 123: Segmentierung
- 124: Dokumentendateien-Erzeugung
- 125: Datenanalyse

- 130: Datenerzeugungsmodule
- 131: Eingangsdateien
- 132: Print Job-System
- 133: Jobticket
- 134: Filterprogramme
- 135: Datenkonversions-Modul
- 136: Print File Manager
- 137: Zwischenspeicher
- 138: Auftrags-Überwachungssystem
- 139: Datenmanipulationsmodul
- 140: Ausgabe-Module
- 141: Spooler

- 150: Barcode-to-Soll-Liste konvertieren
- 151: Soll-Liste
- 152: Fehl-Liste
- 153: OCT Konverter

- 160: Sortierungs-Eingangsdatenstrom
- 161: Sortierungs-Ausgangsdatenstrom

- 170: Druckvorverarbeitung
- 171: Dokumentendienst
- 172: Dokumentenclient

- 175: Barcodeleser-Menüstruktur
- 176: Hauptmenü
- 177: Barcodeleser
- 178: Fehlerhafte Sendung bearbeiten
- 179: Sendung bearbeiten
- 180: Stapel erfassen
- 181: Deckblatt drucken
- 185: Job -ID-Feld
- 186: Job Data Feld
- 187: Device Data Feld
- 190: Kuvertierer
- 191: Scanner
- 195: Anzeigefenster
- A1 - A5: Arbeitsabläufe

## Patentansprüche

1. Verfahren zum Verarbeiten von Dokumentendaten in einem Dokumentendaten-Verarbeitungssystem, das zumindest einen Dokumentenerzeugungscomputer (3, 12), einen Bearbeitungscomputer (4), ein elektronisches Dokumentenausgabesystem (6, 6a..6d, 22a, 22b, 81) und einen Überwachungscomputer (7a) umfaßt, wobei
- Dokumentendaten auf dem Dokumentenerzeugungscomputer (3, 12) mittels eines Dokumentenerzeugungs-Moduls (130) erzeugt werden,
- die Dokumentendaten von dem Dokumentenerzeugungscomputer (3, 12) an den Bearbeitungscomputer (4) übertragen und dort bearbeitet werden und
- die bearbeiteten Dokumentendaten an das Dokumentenausgabesystem (6, 6a..6d, 22a, 22b, 81) zur Ausgabe der Dokumente weitergeleitet werden, wobei das Dokumentenausgabesystem (6, 6a..6d, 22a, 22b, 81) die empfangenen Dokumentendaten zwischenspeichert und/oder direkt an ein oder mehrere Druckgeräte (6, 6a..6d) ausgibt, wobei
- im Bearbeitungscomputer (4) zur Optimierung der Steuerung der nachfolgenden Dokumentenausgabe mittels eines Bearbeitungsmoduls (45)
-- Steuerungsdaten in den übertragenen Dokumentendaten (49, 85a, 86a) hinzugefügt werden, mit denen die nachfolgenden Verfahrensabläufe oder Ausgabegeräte überwacht und/oder gesteuert werden können, oder
-- Steuerungsdaten aus den übertragenen Dokumentendaten (49, 85a, 86a) entfernt werden, die für die weitere Bearbeitung der Dokumentendaten nicht benötigt werden,
- von einem im Bearbeitungscomputer (4) ablaufenden Steuerungsdienstprogramm (45) automatisch eine Steuerungs-Zwischendatei für die hinzugefügten Steuerungsdaten und eine Dokumenten-Zwischendatei für die Dokumentendaten gebildet und abgespeichert werden, so dass die Dokumentendaten bei einem Fehler im Dokumentenausgabesystem (6, 6a..6d, 22a, 22b, 81) erneut vom Bearbeitungscomputer (4) bereitstellbar und dem Dokumentenausgabesystem (6, 6a..6d, 22a, 22b, 81) zuführbar sind und
- das Dokumentenausgabesystem (6, 6a..6d, 22a, 22b, 81) unter Echtzeitbedingungen von dem Überwachungscomputer (7a) mit den Steuerungsdaten dahin gehend überwacht wird, dass Fehler bei der Weiterverarbeitung der Dokumentendaten feststellbar sind und sobald vom Überwachungscomputer (7a) ein Fehler festgestellt wird, kann der Überwachungscomputer (7a) eine Rückmeldung an den Bearbeitungscomputer (4) geben.

2. Verfahren nach Anspruch 1, wobei die Menge und/oder die Art der hinzugefügten oder entferneten Steuerungsdaten mittels eines Einstell-Moduls ausgewählt wird.

3. Verfahren nach Anspruch 1 oder 2, wobei die Steuerungsdaten ein Barcode-Objekt, ein Text Objekt, ein Index Tag Element, ein Medium Overlay und/oder eine Segmentierungsinformation enthalten.

4. Verfahren nach Anspruch 3, wobei die Segmentierungsinformation eine Barcode-Information, eine Textinformation und/oder eine vollständige Sonderseite umfaßt, durch die zwei aufeinanderfolgende Auftragssegmente voneinander trennbar sind.

5. Verfahren nach einem der vorhergehenden Ansprüche, wobei im Zuge einer Segmentierung der Dokumentendaten eine Umsortierung nach vorgegebenen Sortierparametern erfolgt.

6. Verfahren nach einem der vorhergehenden Ansprüche, wobei im Bearbeitungscomputer (4) die Dokumentendaten auftragsweise hinsichtlich ihrer Größe bezüglich eines auswählbaren Parameters analysiert werden und ein Auftrag in zwei Teilaufträge aufgeteilt wird, wenn er eine vorbestimmte Größe überschreitet.

7. Verfahren nach Anspruch 6, wobei in jedem der.Teilaufträge jeweils am Anfang und am Ende des Datenstroms Stapeldaten über den Beginn, das Ende und/oder den Umfang des Teilauftrags eingefügt werden.

8. Verfahren nach einem der vorhergehenden Ansprüche, wobei das Dokumentenausgabesystem (6, 6a..6d, 22a, 22b, 81) ein Hochleistungsdrucksystem ist.

9. Verfahren nach den Ansprüchen 7 und 8, wobei die Anfangs- und/oder Enddaten jeweils als maschinenlesbarer Code, insbesondere als zweidimensionaler Barcode, eingefügt und im Zuge des Druckvorgangs auf das erste Dokument des Stapels und/oder auf das letzte Dokument des Stapels und/oder auf eine Sonderseite gedruckt werden.

10. Verfahren nach Anspruch 9, wobei die ausgedruckten Daten mit einem manuell bewegbaren, inbesondere eine Antenne für eine drahtlose Datenübertragung zu einer Steuerungseinheit umfassenden Barcode-Leser (11a, 11b) gelesen werden, der über eine Steuerungseinheit mit dem Überwachungscomputer (7a) verbunden ist.

11. Verfahren nach Anspruch 10, wobei mit einer EingabeEinheit des Handbarcode-Lesers (11a, 11b) Steuerungsbefehle an den Überwachungscomputer (7a) übermittelbar sind.

12. Verfahren nach einem der vorhergehenden Ansprüche, wobei im Zuge der Überwachung der Dokumentenausgabe unter Verwendung der Steuerungsdaten und/oder einer Sollliste (151) überprüft wird, ob Teile eines Auftrags, insbesondere jede Seite, ausgegeben wurde und bei Fehlen eines überprüften Auftragsteils automatisch im Bearbeitungscomputer (4) ein Nachdruck-Auftrag unter Verwendung der Steuerungs-Zwischendatei und der Dokumenten-Zwischendatei erzeugt wird.

13. Verfahren nach Anspruch 12, wobei im Zuge der Bildung des Nachdruck-Auftrags neue Steuerungsdaten vergeben werden und die Steuerungs-Zwischendatei und/oder die Dokumenten-Zwischendatei aktualisiert wird.

14. Verfahren nach einem der vorhergehenden Ansprüche, wobei die Dokumentenausgabe, insbesondere ein Druckvorgang und/oder die nachfolgende Verarbeitung der gedruckten Dokumente in Nachverarbeitungsgeräten (22a, 22b), nach auswählbaren Informationsgruppen geräteweise erfaßt und verfolgt werden und wobei zur Verfolgung Überwachungsdaten erzeugt werden, die unabhängig von den Dokumentendaten im Dokumentendaten-Verarbeitungssystem (3, 4, 6, 6a..6d, 7, 12, 22a, 22b, 81) verarbeitet werden.

15. Verfahren nach einem der vorhergehenden Ansprüche, wobei
- im Überwachungscomputer (7a) mehrere Programm-Module (35, 36, 37) ablaufen,
- ein erstes Modul (35) zur Überwachung von Geräten vorgesehen ist und ein zweites Modul (36) zum Überwachen von Druckaufträgen und
- durch einen vorgegebenen Funktionsaufruf Daten des einen Moduls (35) innerhalb der Anzeigefläche des anderen Moduls (36) erscheinen.

16. Verfahren nach Anspruch 15, wobei die angezeigten Daten regelmäßig, insbesondere in Echtzeit, aktualisiert werden.

17. Verfahren nach einem der Ansprüche 15 oder 16, wobei die auftragsbezogenen Daten eines System Manager Moduls (36) geräteweise im Anzeigemenü eines Geräte Manager Moduls (35) angezeigt werden.

18. Verfahren nach einem der vorhergehenden Ansprüche, wobei mittels des Überwachungscomputers (7a) erfaßt wird, welche Sendungen und/oder Dokumente in dem Dokumentenausgabesystem(6, 6a..6d, 22a, 22b, 81) bereits verarbeitet wurden und daß an ein Drucknachverarbeitungsgerät (22a, 22b, 81) ein Stopp-Kommando gesandt wird, wenn dort eine Sendung und/oder ein Dokument erfaßt wird, das bereits zu einem früheren Zeitpunkt in einem entsprechenden Drucknachverarbeitungsgerät (22a, 22b, 81) verarbeitet und erfaßt wurde.

19. Dokumentendaten-Verarbeitungsystem, insbesondere mit Mitteln zum Durchführen eines Verfahrens nach einem der vorhergehenden Ansprüche, umfassend:
- einen Dokumentenerzeugungscomputer (3, 12), auf dem mittels eines Dokumentenerzeugungs-Moduls (130) Dokumentendaten erzeugbar sind und von dem die Dokumentendaten an einen Bearbeitungscomputer (4) zur Bearbeitung übertragbar sind,
- wobei der Bearbeitungscomputer (4) ein Bearbeitungsmodul (45) aufweist, das zur Optimierung der Steuerung der nachfolgenden Dokumentenausgabe
-- Steuerungsdaten in den übertragenen Dokumentendaten (49, 85a, 86a) hinzufügt, mit denen die nachfolgenden Verfahrensabläufe oder Ausgabegeräte überwacht und/ oder gesteuert werden können, oder
-- Steuerungsdaten aus den übertragenen Dokumentendaten (49, 85a, 86a), die für die weitere Bearbeitung der Dokumentendaten nicht benötigt werden, entfernt,
- ein Dokumentenausgabesystem (6, 6a..6d,, 22a, 22b, 81), das von dem Bearbeitungscomputer (4) empfangene Dokumentendaten zwischenspeichert und/oder direkt an ein oder mehrere Druckgeräte (6, 6a...6d) ausgibt, sowie
- einem Überwachungscomputer (7a), der mit dem Dokumentenerzeugungscomputer (3, 12), dem Bearbeitungscomputer 84) und dem Dokumentenausgabesystem(6, 6a..6d, 22a, 22b, 81) zum Austauch von Steuerungsdaten verbunden ist und der das Dokumentenausgabesystem (6, 6a..6d, 22a, 22b, 81) mit den Steuerungsdaten unter Echtzeitbedingungen dahin gehend überwacht, dass Fehler bei der Weiterverarbeitung der Dokumentendaten feststellbar sind und sobald vom Überwachungscomputer (7a) ein Fehler festgestellt wird, kann der Überwachungscomputer (7a) eine Rückmeldung an den Bearbeitungscomputer (4) geben, wobei
- von einem im Bearbeitungscomputer (4) ablaufenden Steuerungsdienstprogramm (45) automatisch eine Steuerungs-Zwischendatei für die hinzugefügten Steuerungsdaten und eine Dokumenten-Zwischendatei für die Dokumentendaten gebildet und abgespeichert werden, so dass die Dokumentendaten bei einem Fehler im Dokumentenausgabesystem (6, 6a..6d, 22a, 22b, 81) vom Bearbeitungscomputer (4) erneut bereitstellbar und dem Dokumentenausgabesystem (6, 6a..6d, 22a, 22b, 81) zuführbar sind.

20. System nach Anspruch 19, wobei die Computer (3, 4, 7a, 12) jeweils als separate Baueinheiten ausgebildet sind und zumindest teilweise untereinander über eine Steuerungsebene miteinander verbunden sind.

21. Computerprogramm-Produkt, zum Verarbeiten von Dokumentendaten in einem Dokumenten-Verarbeitungsystem, mit Befehlen, die, wenn sie auf dem Dokumenten-Verarbeitungssystem ausgeführt werden, die Schritte des Verfahrens nach einem der Ansprüche 1 bis 18 ausführen.

## Claims

1. A method for processing document data in a document data processing system that comprises at least one document generation computer (3, 12), a processing computer (4), an electronic document output system (6, 6a..6d, 22a, 22b, 81) and a monitoring computer (7a), wherein
- document data are generated on the document generation computer (3, 12) by means of a document generation module (130),
- the document data are transmitted from the document generation computer (3, 12) to the processing computer (4) and are processed there, and
- the processed document data are forwarded to the document output system (6, 6a..6d, 22a, 22b, 81) for the output of the documents,
wherein the document output system (6, 6a..6d, 22a, 22b, 81) buffers the received document data and/or outputs them directly to one or more printing devices (6, 6a..6d), wherein
- in the processing computer (4) for optimizing the control of the subsequent document output by means of a processing module (45)
-- control data are added to the transmitted document data (49, 85a, 86a), by means of which the subsequent procedures or output devices can be monitored and/or controlled, or
-- control data which are not required for the further processing of the document data are removed from the transmitted document data (49, 85a, 86a),
- a control buffer file for the added control data and a document buffer file for the document data are automatically formed and stored by a control service program (45) running on the processing computer (4) so that the document data can again be provided by the processing computer (4) in the case of an error in the document output system (6, 6a..6d, 22a, 22b, 81) and can be fed to the document output system (6, 6a..6d, 22a, 22b, 81), and
- the document output system (6, 6a..6d, 22a, 22b, 81) is monitored with the control data by the monitoring computer (7a) under real-time conditions in that errors in the further processing of the document data can be determined,
and, as soon as an error is determined by the monitoring computer (7a), the monitoring computer (7a) can give feedback to the processing computer (4).

2. The method according to claim 1, wherein the quantity and/or the type of the added or removed control data is selected by means of a setting module.

3. The method according to claim 1 or 2, wherein the control data comprise a barcode object, a text object, an index tag element, a medium overlay and/or an item of segmentation information.

4. The method according to claim 3, wherein the segmentation information comprises an item of barcode information, an item of text information and/or a complete extra page, via which two successive job segments are separable from one another.

5. The method according to one of the preceding claims, wherein in the course of a segmentation of the document data a resorting ensues according to predetermined sorting parameters.

6. The method according to one of the preceding claims, wherein in the processing computer (4) the document data are analyzed job by job concerning their size with regard to a selectable parameter and a job is divided into two partial jobs when it exceeds a predetermined size.

7. The method according to claim 6, wherein in each partial job stack data about the beginning, the end and/or the extent of the partial job are respectively added at the beginning and at the end of the data stream.

8. The method according to one of the preceding claims, wherein the document output system (6, 6a..6d, 22a, 22b, 81) is a high-performance printing system.

9. The method according to claims 7 and 8, wherein the beginning and/or end data are respectively added as a machine-readable code, in particular as a two-dimensional barcode, and in the course of the print event are printed on the first document of the stack and/or on the last document of the stack and/or on an extra page.

10. The method according to claim 9, wherein the printed data are read with a manually movable barcode reader (11a, 11b), in particular a barcode reader comprising an antenna for a wireless data transmission to a control unit, that is connected to the monitoring computer (7a) via a control unit.

11. The method according to claim 10, wherein control commands can be transmitted to the monitoring computer (7a) with an input unit of the hand barcode reader (11a, 11b).

12. The method according to one of the preceding claims, wherein in the course of the monitoring of the document output, using the control data and/or a target list (151), it is checked whether parts of a job, in particular each page, were output, and in the absence of a checked job part a reproduction job is automatically generated in the processing computer (4) using the control buffer file and the document buffer file.

13. The method according to claim 12, wherein in the course of the formation of the reproduction job, new control data are allocated and the control buffer file and/or the document buffer file are updated.

14. The method according to one of the preceding claims, wherein the document output, in particular a print event and/or the subsequent processing of the printed documents in post-processing devices (22a, 22b), are recorded and tracked device by device according to selectable information groups and wherein monitoring data are generated for tracking that are processed independent of the document data in the document data processing system (3, 4, 6, 6a..6d, 7, 12, 22a, 22b, 81).

15. The method according to one of the preceding claims,
wherein
- a plurality of program modules (35, 36, 37) run in the monitoring computer (7a),
- a first module (35) is provided to monitor devices, and a second module (36) is provided to monitor print jobs, and
- via a predetermined function call, data of the one module (35) appear within the display area of the other module (36).

16. The method according to claim 15, wherein the displayed data are regularly updated, in particular in real-time.

17. The method according to one of the claims 15 or 16, wherein the job-related data of a system manager module (36) are displayed device by device in the display menu of a device manager module (35).

18. The method according to one of the preceding claims, wherein it is recorded by means of the monitoring computer (7a) which mail pieces and/or documents were already processed in the document output system (6, 6a..6d, 22a, 22b, 81), and that a stop command is sent to a print post-processing device (22a, 22b, 81) when a mailing and/or a document is registered there that was already processed and registered at an earlier point in time in a corresponding print post-processing device (22a, 22b, 81).

19. A document data processing system, in particular with means for performing a method according to one of the preceding claims, comprising:
- a document generation computer (3, 12) by which document data can be generated by means of a document generation module (130) and from which the document data can be transmitted to a processing computer (4) for processing,
- wherein the processing computer (4) comprises a processing module (45) which for optimizing the control of the subsequent document output
-- adds control data to the transmitted document data (49, 85a, 86a) with which the subsequent procedures or output devices can be monitored and/or controlled, or
-- removes control data from the transmitted document data (49, 85a, 86a) that are not required for the further processing of the document data,
- a document output system (6, 6a..6d, 22a, 22b, 81) that buffers document data received from the processing computer (4) and/or directly outputs them to one or more print devices (6, 6a..6d), as well as
- a monitoring computer (7a) that is connected with the document generation computer (3, 12), the processing computer (84) and the document output system (6, 6a..6d, 22a, 22b, 81) to exchange control data and that monitors the document output system (6, 6a..6d, 22a, 22b, 81) with the control data under real-time conditions such that errors in the further processing of the document data can be determined, and as soon as an error is determined by the monitoring computer (7a), the monitoring computer (7a) can give feedback to the processing computer (4), wherein
- by means of a control service program (45) running on the processing computer (4) a control buffer file for the added control data and a document buffer file for the document data are automatically formed and stored so that the document data can be provided once again by the processing computer (4) given an error in the document output system (6, 6a..6d, 22a, 22b, 81) and can be fed to the document output system (6, 6a..6d, 22a, 22b, 81).

20. The system according to claim 19, wherein the computers (3, 4, 7a, 12) are respectively fashioned as separate modular units and are at least partially connected with one another via a control level.

21. A computer program product for processing document data in a document processing system with commands which when executed on the document processing system perform the steps of the method according to one of the claims 1 to 18.

## Revendications

1. Procédé destiné au traitement de données de documents dans un système de traitement de données de documents comprenant au moins un ordinateur générateur de documents (3, 12), un ordinateur de traitement (4), un système électronique de distribution de documents (6, 6a..6d, 22a, 22b, 81) et un ordinateur de surveillance (7a), dans lequel
- des données de documents sont générées sur l'ordinateur générateur de documents (3, 12) au moyen d'un module générateur de documents (130),
- les données de documents sont transmises par l'ordinateur générateur de documents (3, 12) à l'ordinateur de traitement (4) et y sont traitées, et
- les données de documents traitées sont acheminées vers le système de distribution de documents (6, 6a..6d, 22a, 22b, 81) afin de distribuer les documents, dans lequel le système de distribution de documents (6, 6a..6d, 22a, 22b, 81) met en tampon les données de documents reçues et/ou les distribue directement à un ou plusieurs appareils d'impression (6, 6a..6d), dans lequel
- dans l'ordinateur de traitement (4), en vue d'optimiser la commande de la distribution effectuée ensuite des documents, au moyen d'un module de traitent (45),
-- des données de commande sont introduites dans les données de documents transmises (49, 85a, 86a), au moyen desquelles les processus ou les appareils de distribution suivants peuvent être surveillés et/ou commandés, ou
-- des données de commande sont supprimées des données de documents transmises (49, 85a, 86a) qui sont nécessaires pour le traitement ultérieur des données de document,
- un fichier tampon de commande destiné aux données de commande introduites et un fichier tampon de documents destiné aux données de documents sont automatiquement créés et stockés par un programme de service de commande (45) s'exécutant dans l'ordinateur de traitement (4) de manière à ce que les données de documents puissent de nouveau être fournies par l'ordinateur de traitement (4) en cas d'erreur dans le système de distribution de documents (6, 6a..6d, 22a, 22b, 81) et puissent être acheminées vers le système de distribution de documents (6, 6a..6d, 22a, 22b, 81), et
- le système de distribution de documents (6, 6a..6d, 22a, 22b, 81) est surveillé en temps réel par l'ordinateur de surveillance (7a) à l'aide des données de commande de telle sorte que des erreurs puissent être détectées lors du traitement ultérieur des données de documents et que, dès qu'une erreur est détectée par l'ordinateur de surveillance (7a), l'ordinateur de surveillance (7a) puisse envoyer un message de rétroaction à l'ordinateur de traitement (4).

2. Procédé selon la revendication 1, dans lequel la quantité et/ou le type des données de commande introduites ou supprimées est/sont sélectionné(s) au moyen d'un module de réglage.

3. Procédé selon la revendication 1 ou 2, dans lequel les données de commande contiennent un objet de code à barres, un objet de texte, un élément marqueur d'indexation, une couche de recouvrement d'agent et/ou une information de segmentation.

4. Procédé selon la revendication 3, dans lequel l'information de segmentation comprend une information de texte et/ou une page spéciale complète au moyen desquelles deux segments de commandes consécutifs peuvent être séparés l'un de l'autre.

5. Procédé selon l'une quelconque des revendications précédentes, dans lequel, dans le contexte d'une segmentation des données de documents, un tri est effectué conformément à des paramètres de tri prédéterminés.

6. Procédé selon l'une quelconque des revendications précédentes, dans lequel les données de documents sont analysées dans l'ordinateur de traitement (4) commande par commande en ce qui concerne leur taille en tenant compte d'un paramètre pouvant être sélectionné et une commande est décomposée en deux commandes partielles lorsqu'elle dépasse une taille prédéterminée.

7. Procédé selon la revendication 6, dans lequel, dans chacune des commandes partielles, des données de piles concernant le début, la fin et/ou l'étendue de la commande partielle sont respectivement introduites au début et à la fin du flux de données.

8. Procédé selon l'une quelconque des revendications précédentes, dans lequel le système de distribution de documents (6, 6a..6d, 22a, 22b, 81) est un système d'impression à hautes performances.

9. Procédé selon les revendications 7 et 8, dans lequel les données de début et/ou de fin sont respectivement introduites sous la forme de codes lisibles par machine, notamment de codes à barres bidimensionnels et, dans le contexte de l'impression, sont imprimées sur le premier document de la pile et/ou sur le dernier document de la pile et/ou sur une page spéciale.

10. Procédé selon la revendication 9, dans lequel les données imprimées sont lues à l'aide d'un lecteur de code à barres (11a, 11b) comprenant notamment une antenne pouvant être déplacée manuellement, destinée à la transmission de données sans fil à une unité de commande, lequel lecteur de code à barres est connecté par l'intermédiaire d'une unité de commande à l'ordinateur de surveillance (7a).

11. Procédé selon la revendication 10, dans lequel des instructions de commande peuvent être communiquées par l'ordinateur de surveillance (7a) au moyen d'une unité d'entrée du lecteur de code à barres (11a, 11b).

12. Procédé selon l'une quelconque des revendications précédentes, dans lequel il est vérifié, dans le contexte de la surveillance de la distribution de documents par utilisation des données de commande et/ou d'une liste de consigne (151) si des parties d'une commande, notamment chaque page, ont été délivrées et dans le cas où une partie de commande n'a pas pu être vérifiée, une commande de réimpression est automatiquement générée dans l'ordinateur de traitement (4) par utilisation du fichier tampon de commande et du fichier tampon de documents.

13. Procédé selon la revendication 12, dans lequel de nouvelles données de commande sont fournies dans le contexte de la création de la commande de réimpression et le fichier tampon de commande et/ou le fichier tampon de documents est/sont actualisé(s).

14. Procédé selon l'une quelconque des revendications précédentes, dans lequel, lors de la distribution de documents, un processus d'impression et/ou le traitement effectué ensuite des documents imprimés est/sont notamment détecté(s) et suivi(s) appareil par appareil dans les appareils de post-traitement (22a, 22b), conformément à des groupes d'informations pouvant être sélectionnés et dans lequel des données de surveillance qui sont traitées indépendamment des données de documents dans le système de traitement de données de documents (3, 4, 6, 6a..6d, 7, 12, 22a, 22b, 81) sont générées pour effectuer le suivi.

15. Procédé selon l'une quelconque des revendications précédentes, dans lequel
- plusieurs modules de programmes (35, 36, 37) s'exécutent dans l'ordinateur de surveillance (7a),
- il est prévu un premier module (35) destiné à surveiller des appareils et un second module (36) destiné à surveiller des commandes d'impression et
- des données dudit module (35) apparaissent sur la surface d'affichage de l'autre module (36) lors d'un appel à une fonction prédéterminée.

16. Procédé selon la revendication 15, dans lequel les données affichées sont actualisées régulièrement, notamment en temps réel.

17. Procédé selon l'une quelconque des revendications 15 ou 16, dans lequel les données liées aux commandes d'un module gestionnaire de système (36) sont affichées appareil par appareil dans un menu d'affichage d'un module gestionnaire d'appareil (35).

18. Procédé selon l'une quelconque des revendications précédentes, dans lequel l'ordinateur de surveillance (7a) permet de détecter les envois et/ou les documents qui ont déjà été traités dans le système de distribution de documents (6, 6a..6d, 22a, 22b, 81) et un ordre d'arrêt est envoyé à un appareil de post-traitement d'impression (22a, 22b, 81) lorsqu'un envoi et/ou un document ayant déjà été traité et détecté antérieurement dans un appareil de post-traitement d'impression correspondant (22a, 22b, 81) est détecté.

19. Système de traitement de données de documents, comportant notamment des moyens destinés à mettre en oeuvre un procédé selon l'une quelconque des revendications précédentes, comprenant :
- un ordinateur générateur de documents (3, 12) sur lequel des données de documents peuvent être générées au moyen d'un module générateur de documents (130) et par lequel les données de documents peuvent être transmises à un ordinateur générateur de documents (4) en vue d'un traitement,
- dans lequel l'ordinateur de traitement (4) comprend un module de traitement (45) qui, à des fins d'optimisation de la commande de la distribution effectuée ensuite des documents,
-- introduit dans les données de documents transmises (48, 85a, 86a) des données de commande au moyen desquelles les processus ou les appareils de distribution suivants peuvent être surveillés et/ou commandés, ou
-- supprime des données de commande nécessaires au traitement ultérieur des données de documents des données de documents transmises (49, 85a, 86a),
- un système de distribution de documents (6, 6a..6d, 22a, 22b, 81) qui met en mémoire tampon des données de documents reçues par l'ordinateur de traitement (4) et/ou les délivre directement à un ou plusieurs appareils d'impression (6, 6a..6d), et
- un ordinateur de surveillance (7a) qui est connecté à l'ordinateur générateur de documents (3, 12), à l'ordinateur de traitement (4) et au système de distribution de documents (6, 6a..6d, 22a, 22b, 81) afin d'échanger des données de commande et qui surveille en temps réel le système de distribution de documents (6, 6a..6d, 22a, 22b, 81) au moyen des données de commande de telle sorte que des erreurs puissent être détectées lors du traitement ultérieur des données de documents, et dès qu'une erreur est détectée par l'ordinateur de surveillance (7a), l'ordinateur de surveillance (7a) peut fournir un message de rétroaction à l'ordinateur de traitement (4), dans lequel
- un fichier tampon de commande destiné aux données de commande fournies et un fichier tampon de documents destiné aux données de documents sont automatiquement construits et stockés par un programme de service de commande (45) s'exécutant dans l'ordinateur de traitement (4) de manière à ce que les données de documents puissent être de nouveau fournies en cas d'erreur dans le système de distribution de documents (6, 6a..6d, 22a, 22b, 81) par l'ordinateur de traitement (4) et puissent être acheminées vers le système de distribution de documents (6, 6a..6d, 22a, 22b, 81).

20. Système selon la revendication 19, dans lequel les ordinateurs (3, 4, 7a, 12) sont respectivement réalisés sous la forme d'unités constitutives distinctes et sont au moins partiellement interconnectés par l'intermédiaire d'un plan de commande.

21. Produit de programme informatique destiné à traiter des données de documents dans un système de traitement de documents au moyen d'instructions qui, lorsqu'elles sont exécutées sur le système de traitement de documents, mettent en oeuvre les étapes du procédé selon l'une quelconque des revendications 1 à 18.
